(19)

Europäisches
Patentamt
European
Patent Office
Office européen
des brevets

(11) **EP 1 838 062 B1**

(12) **EUROPEAN PATENT SPECIFICATION**

(45) Date of publication and mention
of the grant of the patent:
**13.05.2009 Bulletin 2009/20**

(51) Int Cl.:
***H04L 27/26*** *(2006.01)*

(21) Application number: **06251481.5**

(22) Date of filing: **20.03.2006**

(54) **OFDM transmitters and transmiting methods with reduced peak to average power ratio**

OFDM Sender und Sendeverfahren mit reduziertem Spitzen- zu Mittelwertleistungsverhältnis

Emetteur et procédé d'émission MDFO réduisant le rapport entre la puissance de crête et la puissance moyenne

(84) Designated Contracting States:
**DE FR GB IT**

(43) Date of publication of application:
**26.09.2007 Bulletin 2007/39**

(73) Proprietor: **Fujitsu Ltd.**
**Kawasaki-shi, Kanagawa 211-8588 (JP)**

(72) Inventor: **Abedi, Saied**
**Reading**
**Berkshire RG1 4LY (GB)**

(74) Representative: **Hitching, Peter Matthew et al**
**Haseltine Lake**
**Lincoln House**
**300 High Holborn**
**London**
**WC1V 7JH (GB)**

(56) References cited:
**US-A1- 2005 089 109**

- **JAYALATH A D S ET AL: "REDUCED COMPLEXITY PTS AND NEW PHASE SEQUENCES FOR SLM TO REDUCE PAP OF AN OFDM SIGNAL" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY : IEEE, US, vol. VOL. 3 OF 3. CONF. 51, 15 May 2000 (2000-05-15), pages 1914-1917, XP000968337 ISBN: 0-7803-5719-1**

**Description**

The present invention relates to orthogonal frequency division multiplexing (OFDM) communication systems, and more particularly, to transmitters and transmitting methods for use in such systems.

An OFDM system is a type of multi-carrier transmission system, in which a single data stream is modulated onto N parallel sub-carriers, each sub-carrier signal having its own centre frequency. The sub-carriers are transmitted together as a single combined OFDM signal, the individual sub-carrier signals being recoverable in an OFDM receiver due to the orthogonal property of the sub-carriers. Typically, the number N of sub-carriers may be relatively large, for example N=512.

OFDM systems have many advantages. Orthogonal frequency division multiplexing (OFDM) is a modulation technique that is based on traditional frequency division multiplexing (FDM), but is much more spectrally efficient than traditional FDM because the sub-channels (sub-carriers) may be spaced much closer together in frequency (i.e. until they are actually overlapping) than in FDM systems (in which guard bands are required between each sub-channel).

The spectral efficiency of an OFDM system is achieved because the frequency of the respective sub-carriers are chosen such that they are mutually orthogonal (which means that they are mutually perpendicular in a mathematical sense), thereby allowing the spectrum of each sub-carrier to overlap the spectra of other sub-carriers without interfering with them. The effect of this mutually orthogonal nature of the OFDM sub-carriers is that the required bandwidth is greatly reduced, as compared to traditional FDM systems, by removing the guard bands and allowing the spectra of the sub-carriers to overlap one another.

Another advantage of OFDM is its resilience to multipath, which is the effect of multiple reflected signals hitting the receiver. OFDM systems are capable of overcoming the potential problems associated with multipath, such as interference and frequency-selective fading, because the total signal bandwidth (i.e. the amount of data to be sent in a given time interval) is divided over the plurality of sub-carriers. As a result of this parallel transmission, the duration of each OFDM data symbol may be relatively long, and each individual sub-carrier may have a relatively low information rate, thereby allowing the system to benefit from enhanced immunity to impulse noise and reflections.

OFDM's high spectral efficiency and resistance to multipath make it an extremely suitable technology to meet the demands of wireless data traffic. Today, the technology is used in such systems as asymmetric digital subscriber lines (ADSL) as well as in wireless systems such as IEEE 802.11 a/g (Wi-Fi) and IEEE 802.16 (Wi-MAX). It is also used for wireless digital audio and video broadcasting. OFDM is currently one of the prime technologies being considered for use in future fourth generation (4G) networks.

Despite its advantages, OFDM systems suffer from a high PAPR (peak to average power ratio) problem. In general, in OFDM systems, peak envelope power of the OFDM signal increases according to the number of sub-carriers, which can lead to a degradation of the system performance as the amplifier is unable to handle signals outside its linear range. That is, when the PAPR is high, either system performance degradation occurs, or an amplifier having a very wide dynamic range is required in the transmitter, both of which are undesirable.

Numerous techniques have been proposed to solve the problems with PAPR in OFDM communication systems. Such existing techniques are briefly summarised below, however it is to be noted that a common feature in each of the previously-considered techniques discussed below is that they each seek to directly minimise the PAPR in the transmitted OFDM signal.

A back-off technique has been proposed for use in a high-power linear amplifier in the transmitter. The back-off technique allows the multi-carrier signal to be maintained within a linear range by lowering an input power to the amplifier. This has the effect of lowering the operation point of the high-power linear amplifier in order to reduce distortion of the signal. However, the greater the extent of the back-off, the less efficient the utilisation of the amplifier becomes. Accordingly, a signal having a high PAPR may cause the efficiency of the linear amplifier to deteriorate.

Another technique which has been proposed is a clipping technique. In this technique, when the amplitude of the signal exceeds a predetermined reference clipping value set in advance, a portion of the amplitude of the signal exceeding the reference clipping value is removed or clipped out. However, in the clipping technique, non-linear operation may cause in-band distortion, thereby increasing inter-symbol interference and bit error rate. Furthermore, in the clipping technique, out-off-band noise may cause channel interference, thereby causing the spectrum efficiency to deteriorate.

In a block coding technique, additional sub-carriers are provided which are coded and transmitted in such a way as to lower the PAPR of the overall set of sub-carriers, i.e. the sub-carriers used for transmission of data and the additional sub-carriers used for block coding. In this technique, the coding of the additional sub-carriers achieves the correction of errors and the reduction of the PAPR without distortion of the signal. However, when sub-carriers have large amplitudes, this technique provides a very poor spectrum efficiency and requires a large look-up table or a large generation matrix, increasing the processing required at the transmitter.

One variant of a block-coding technique is a tone-reservation (TR) technique, in which some sub-carriers from among the entire set of available sub-carriers are reserved for PAPR reduction. The reserved sub-carriers carry no data. The receiver simply disregards the sub-carriers which carry no data and recovers the data from the remaining sub-carriers. This can enable the receiver to have a simpler construction. A gradient algorithm has been proposed for use with the TR technique. In this case, signals having an impulse characteristic are employed over the sub-carriers that carry no data, and inverse fast fourier transform (IFFT) output signals are clipped using the signals having.the impulse characteristic. When the generated signals having an impulse characteristic are added to the IFFT output signals, data distortion only occurs in the reserved sub-carriers carrying no data and does not occur in the other sub-carriers carrying data. A better understanding of the TR technique may be obtained by consideration of a paper entitled "Text Proposal for a PAPR Reduction of UL OFDMA", ZTE, Nortel, and by consideration of a paper entitled "Tone Reservation method for PAPR Reduction scheme", IEEE 802.16e-03/60rl, Sung-Eun Park et al, Samsung Elec..

Phase adjustment techniques have also been proposed for solving the PAPR problem. The phase adjustment techniques include a partial transmit sequence (PTS) method and a selective mapping (SLM) method. In the PTS method, input data is provided into M sub-blocks, each of the M sub-blocks being subjected to an L-point IFFT and then multiplied by a phase factor for minimising the PAPR. Finally, the M sub-blocks are summed and transmitted. In the SLM method, a given block of data which will constitute one OFDM symbol is multiplied by U (U>1) different available phase vectors. Each available phase vector comprises N phase elements, each corresponding individually to one of the N sub-carriers. Each phase element sets a phase adjustment to be applied by the transmitter to the corresponding sub-carrier for the data block concerned. The effect of this is to generate U statistically dependent "candidate" or "prospective" OFDM symbols for the given data blocks. The transmitter selects that one of the candidate symbols having the lowest PAPR and transmits the selected symbol to the receiver or receivers. The phase vector which was used to produce the selected symbol is commonly referred to as the selected phase vector $\tilde{u}$.

A better understanding of the SLM and PTS techniques may be obtained by consideration of the following three papers: 1) "SLM and PTS Peak-Power Reduction of OFDM Signals Without Side Information", A.D.S. Jayalath, C. Tellambura, IEEE Transactions on Wireless Communications, Volume 4, Issue 5, Sept. 2005, pages 2006-2013, Digital Object Identifier 10.1109/TWC.2005.853916; 2) "A blind SLM receiver for PAR-reduced OFDM" A.D.S. Jayalath and C. Tellambura, VTC 2002-Fall, Volume 1, pages 219-222 (24-28 September 2002); and 3) "A comparison of Peak Power Reduction Schemes for OFDM", Stefan H. Mutter and Johannes B. Huber, In Proc. of the IEEE Global Telecommunications Conference GLOBECOM '97, pp. 1-5, November 1997, Phoenix, Arizona, USA.

As mentioned above, each of the previously-considered techniques seeks to directly minimise the PAPR of the transmitted OFDM signals. However, simulations and experiments have shown that an OFDM signal chosen from a number of prospective OFDM signals because it has the lowest PAPR may not be the best signal for transmission. Any method which generally focuses on direct reduction of PAPR does not necessarily take into account the possibility of the existence of many peaks in the vicinity of the maximum. That is, it is possible for one prospective OFDM signal to have a slightly higher PAPR than another prospective OFDM signal, but to have fewer peaks in the vicinity of the maximum than that other prospective OFDM signal. In that case, it is possible that the prospective OFDM signal having the slightly higher PAPR may be more suitable for transmission than the prospective signal having the slightly lower PAPR.

It is desirable to solve the above-mentioned problems relating to existing techniques used in OFDM transmitters. More particularly, it is desirable to provide alternative methods, and transmitters operable to employ such methods, for selecting a prospective OFDM signal from a plurality of prospective OFDM signals such that a preferred prospective OFDM signal is transmitted.

According to an embodiment of a first aspect of the present invention, there is provided a transmission method for use in an OFDM transmitter, the method comprising: obtaining a plurality of indicators for a prospective OFDM signal, each indicator of said plurality of indicators being indicative of a magnitude of a predetermined property of its prospective OFDM signal expected at a respective signal time; identifying each indicator of said plurality of indicators which indicates that the expected magnitude at the signal time concerned satisfies a predetermined condition; accumulating the identified indicators; assessing the suitability of said signal for transmission in dependence upon a result of said accumulation; and transmitting either said signal or another prospective OFDM signal in dependence upon the assessed suitability.

Previously-considered OFDM transmitters typically seek to identify a peak power in a prospective OFDM signal. That is, such previously-considered transmitters only seek to identify one peak and accordingly no accumulation of identified indicators is required. Such previously-considered transmitters may ignore, or not take properly into account, the existence of other important peaks in a prospective OFDM signal. Embodiments of the present invention, in contrast, identify each indicator that satisfies a predetermined condition, and accumulate those indicators. Accordingly, advantageously, embodiments of the present invention may take into account a plurality of points (for example, a plurality of peaks) in a prospective OFDM signal that may be important when determining whether a particular OFDM signal is suitable for transmission.

Preferably, the obtaining, identifying, accumulating and assessing steps are carried out for a plurality of prospective OFDM signals. That is, a method embodying the present invention preferably assesses the suitability of more than one prospective OFDM signal for transmission by obtaining indicators for each of those signals. In that case, such a method may transmit one of said prospective OFDM signals in dependence upon the respective suitabilities of those signals for transmission. It will of course be appreciated that such a method would preferably transmit the most suitable one of those signals, although optionally such a method could transmit another one of those signals if other factors need to be taken into account.

Optionally, the predetermined condition is that the magnitude of the indicator concerned is greater than a predetermined threshold level. Alternatively, the predetermined condition could be that the magnitude of the indicator concerned is lower than a predetermined threshold level. The predetermined condition could also be that the magnitude of the indicator concerned is within a predetermined range of values.

Preferably, each indicator is indicative of a power level of its prospective OFDM signal. In this way, by identifying indicators that exceed a predetermined threshold level, for example a power threshold level, a method embodying the present invention can obtain an estimate (i.e. the result of the accumulation) of what proportion of particular prospective OFDM signal's signal power is above the threshold.

This is particularly advantageous if an amplifier in the transmitter has a clipping level. A clipping level may be understood to be a power level at which the amplifier ceases to operate linearly, i.e. a power level above which a prospective OFDM signal must be clipped in order to ensure linear amplification of the so-clipped signal. In that case, if the predetermined threshold level is a clipping level of such an amplifier, each accumulation result will give an indication of what proportion of the corresponding prospective OFDM signal will be clipped in the amplifier. Clearly, an increased amount of clipping will lead to an increased BER (bit error rate), which is disadvantageous. In that case, the most suitable prospective OFDM signal may have the lowest accumulation result, indicating that a low proportion of the signal will be clipped in the amplifier.

Preferably, the power threshold level is set to be higher than a clipping level of an amplifier in the transmitter. This may limit the number of identified indicators to a manageable level, and thereby enable the processing burden on the transmitter, and the resistance to the effect of noise in a practical amplifier to be limited. Of course, the threshold level should be set so that normally at least two indicators are identified.

OFDM transmitters are digital systems, and accordingly prospective OFDM signals are defined at a plurality of sample times. Preferably, a method embodying the present invention obtains, for the or each prospective signal, an indicator for each such sample time. This enables a high number of indicators to be obtained, thereby to gain a detailed "picture" of the signal concerned.

As mentioned above, when the predetermined threshold level is a power threshold level, and the indicators are indicative of a power level of the prospective OFDM signal concerned, the power levels of the identified indicators will each exceed the threshold by an amount. That is, the magnitude of each identified indicator will exceed the predetermined threshold level by a respective "excess" amount. Preferably, therefore, the or each accumulating step comprises summing the excess amounts for the identified indicators for the prospective OFDM signal concerned. This is preferable because the accumulation result will then give an indication of an amount of energy in the prospective OFDM signal concerned that will be lost in the amplifier. The results may be termed Accumulated Clipped Power (ACP) values in this case.

Optionally, the or each assessing step comprises comparing the result of the accumulation concerned with a target value, and determining that the OFDM signal concerned is suitable for transmission if that result is below the target value. This may enable a series of OFDM signals to be assessed in order, and the first acceptable signal to be transmitted. This can be advantageous because it is possible that the transmitter need not consider all of a series of prospective OFDM signals.

Preferably, the or each assessing step comprises comparing the result of the accumulation concerned with the result of each other accumulation, and determining that the OFDM signal concerned is suitable for transmission if that result is smaller than each other result. This can be advantageous in that the signal with the lowest accumulation result, for example the one having the least accumulated clipped power (ACP) value, may be transmitted.

One method embodying the present invention may employ a phase adjustment technique in which at least two prospective OFDM signals are formed from the same set of symbols (data and/or pilot symbols) by applying a different set of phase adjustments thereto. In that case, the transmitting step preferably comprises employing the set of phase adjustments corresponding to the signal to be transmitted during operation of said technique. Such a phase adjustment technique may be a selective mapping (SLM) technique in which a phase vector u of a possible U phase vectors is employed. A method embodying the present invention may therefore enable a particular phase vector of the U possible phase vectors to be chosen such that the transmitted OFDM signal has a lower ACP value than if it had been transmitted using any other of the U possible phase vectors.

Another method embodying the present invention may employ a phase adjustment technique in which two or more prospective OFDM signals are formed from the same set of data sequences by applying a different set of phase adjustments thereto, wherein each sequence of the set of sequences is the inverse Fourier transform of a corresponding sub-block of symbols (data and/or pilot symbols), and wherein, for each such prospective OFDM signal, each phase adjustment of the set of phase adjustments concerned is applied to a different one of said sequences. In that case, the transmitting step preferably comprises employing the set of phase adjustments corresponding to the signal to be transmitted during operation of said technique. Such a phase adjustment technique may be a partial transmit sequence (PTS)

EP 1 838 062 B1

technique in which a set b of B possible sets of phase factors (phase adjustments) is applied. A method embodying the present invention may therefore enable a particular set of phase factors of the B possible sets to be chosen such that the transmitted OFDM signal has a lower ACP value than if it had been transmitted using any other of the B possible sets.

Yet another method embodying the present invention may employ a reservation technique in which a plurality of the available sub-carriers are reserved for signal adjustment, wherein the or each prospective OFDM signal is formed during a cycle of an iterative process performed on an initial OFDM signal. The process may comprise, in a first cycle, subtracting a signal having no substantial frequency components in unreserved sub-carriers from the initial OFDM signal to form one said prospective OFDM signal and, in second and successive cycles, subtracting the or another signal also having no substantial frequency components in unreserved sub-carriers from the prospective OFDM signal formed in the preceding cycle to form another said prospective OFDM signal. In that case, the transmitting step preferably comprises stopping the iterative process so as to transmit the prospective OFDM signal to be transmitted. Such a reservation technique may be a tone reservation (TR) technique in which a peak reduction kernel p having values only in the reserved sub-carriers (or tones) is used (possibly in a shifted, scaled, or phase-rotated form) to iteratively clip successive prospective OFDM signals until a suitable prospective OFDM signal is obtained. A method embodying the present invention may therefore enable the iterative process (e.g. a gradient algorithm) to be stopped such that the transmitted OFDM signal has at least an acceptable ACP value.

According to an embodiment of a second aspect of the present invention, there is provided an OFDM transmitter, comprising: indicator obtaining means operable to obtain a plurality of indicators for a prospective OFDM signal, each indicator of said plurality of indicators being indicative of a magnitude of a predetermined property of its prospective OFDM signal expected at a respective signal time; identification means operable to identify each indicator of said plurality of indicators which indicates that the expected magnitude at the signal time concerned satisfies a predetermined condition; accumulating means operable to accumulate the identified indicators; assessing means operable to assess the suitability of said signal for transmission in dependence upon a result of said accumulation; and transmitting means operable to transmit either said signal or another prospective OFDM signal in dependence upon the assessed suitability.

According to an embodiment of a third aspect of the present invention, there is provided a computer program which when executed in an OFDM transmitter causes the transmitter to carry out a method embodying the aforementioned first aspect of the present invention.

It is envisaged that embodiments of the present invention may be applied to any OFDM transmitter as a tool for selecting a prospective OFDM signal from a set of prospective OFDM signals for transmission. That is, embodiments of the present invention may be used universally to replace, for example, the use of PAPR measurements to select signals. Simulations show that the use of an ACP value (as mentioned above) rather than a PAPR value as a tool for selecting a prospective OFDM signal produces a better performance in an OFDM transmitter, manifested for example in a reduced BER.

Reference will now be made, by way of example, to the accompanying drawings, in which:

Figure 1 is a flow chart of a method 1 embodying the present invention.
Figure 2 is a schematic diagram of a transmitter 2 embodying the present invention.
Figure 3 is a schematic diagram of a transmitter 20 embodying the present invention.
Figure 4 is a flow chart of a method 28 embodying the present invention..
Figures 5 and 6 are example waveform diagrams of prospective signals A and B.
Figure 7 is a table of simulation parameters
Figures 8 and 9 are graphs showing the results of simulations.
Figure 10 is a schematic diagram of a transmitter 30 embodying the present invention.
Figure 11 is a flow chart of a method 40 embodying the present invention.
Figure 12 is a schematic diagram of a transmitter 50 embodying the present invention.
Figure 13 is a flow chart of a method 100 embodying the present invention.
Figure 14 is a flow chart of a method 110 embodying the present invention.

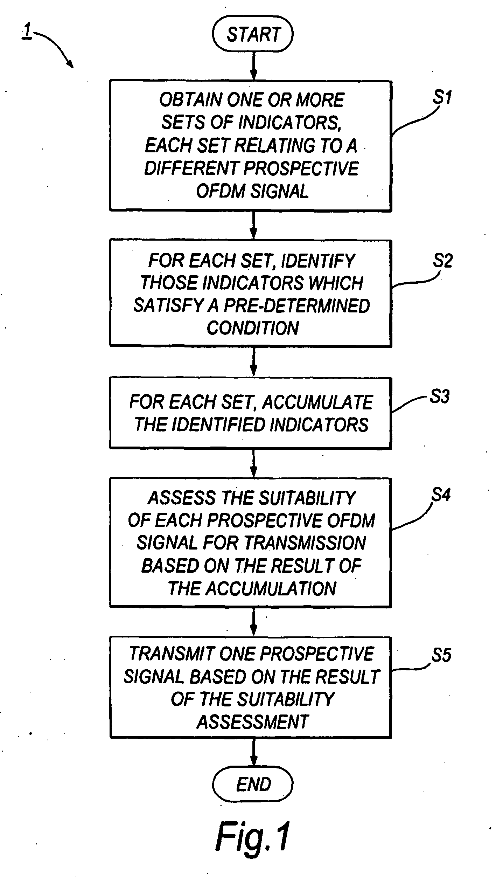

Figure 1 is a flow diagram of a method 1 embodying the present invention. The method 1 comprises steps S1 to S5. In step S1, one or more sets of indicators are obtained, each set of indicators relating to a different prospective OFDM signal. Each obtained indicator may be indicative of a magnitude of a predetermined property of its related prospective OFDM signal expected at a respective signal time. The predetermined property may be, for example, a voltage, a current, or a power level.

The or each prospective signal may be representative of any amount of data. For example, the or each prospective signal may represent one OFDM symbol, or may represent an OFDM frame comprising a plurality of OFDM symbols. The signal times to which the indicators relate may be regularly or irregularly spaced along the prospective OFDM signal concerned.

In step S2, those indicators which satisfy a predetermined condition are identified for each set. The predetermined condition may be, for example, that the magnitude has exceeded a threshold level. For example, if the predetermined property is a signal power level, the predetermined condition may be a threshold power level.

In step S3, the identified indicators are accumulated for each set of indicators. The accumulation may involve counting the number of identified indicators for each set. Alternatively, or in addition, the accumulation may involve summing the magnitudes of the identified indicators for each set, or summing a part of the magnitude of each identified indicator for each set. In preferred embodiments of the present invention, the accumulation involves summing those parts of the magnitudes of the identified indicators that exceed a threshold level. The identified indicators may, of course, be accumulated in any other way.

In step S4, the suitability of the or each prospective OFDM signal is assessed based on the result of the accumulation. The suitability of a particular prospective OFDM signal for transmission may be assessed by comparing the accumulation result for that signal with a predetermined suitability threshold level, or set of threshold levels. This method of assessment may be carried out, for example, if only one prospective OFDM signal exists. Alternatively, the suitability of a particular prospective OFDM signal for transmission may be assessed by comparing the result of the accumulation for that prospective signal with the result of the accumulation for other prospective signals. In that case, one prospective OFDM signal may be more suitable for transmission than another prospective OFDM signal, for example if it has the higher (or lower) accumulation result.

In step S5, one prospective signal is transmitted based on the result of the suitability assessment of step S4. For example, the most suitable prospective OFDM signal may be transmitted.

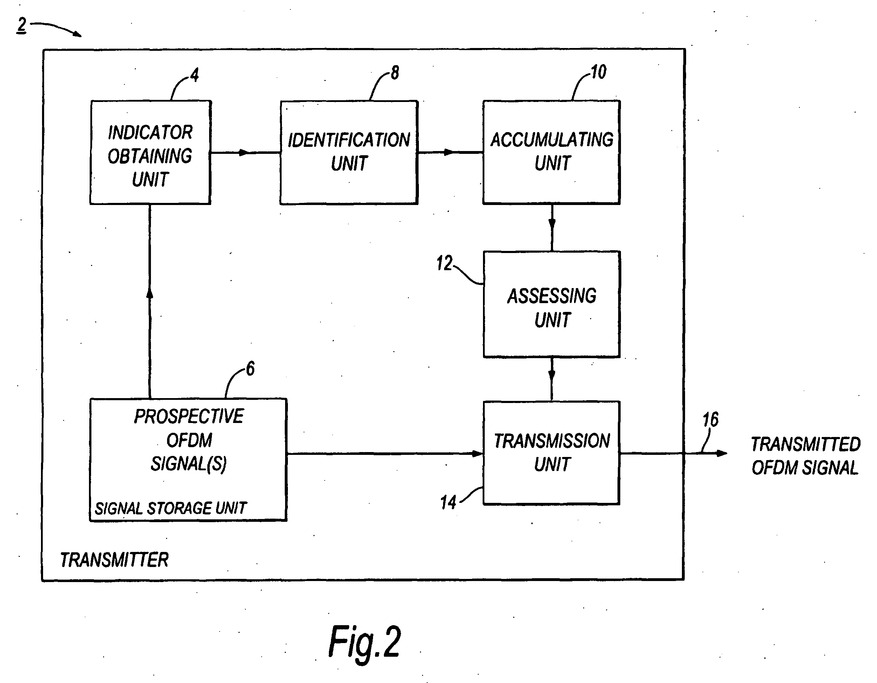

Figure 2 is a schematic diagram of a transmitter 2 embodying the present invention. The transmitter 2 is operable to carry out the method 1, and accordingly comprises an indicator obtaining unit 4, a signal storage unit 6 storing a set of prospective OFDM signals, an identification unit 8, an accumulating unit 10, an assessing unit 12, and a transmission unit 14.

The indicator obtaining unit 4 is operable to obtain one or more sets of indicators, each set relating to a different prospective OFDM signal of the set of signals stored in the signal storage unit 6. The identification unit 8 is operable, for each set, to identify those indicators which satisfy a predetermined condition. The accumulating unit 10 is operable, for each set, to accumulate the identified indicators identified in the identification unit 8. The assessing unit 12, is operable to asses the suitability of the or each prospective OFDM signal for transmission based on the result of the accumulation carried out in the accumulating unit 10. The transmission unit 14 is operable to transmit a prospective signal as a transmitted OFDM signal 16 based on the result of the suitability assessment carried out in the assessing unit 12.

In the further embodiments of the present invention disclosed herein, the obtained indicators are indicative of a magnitude of a signal power of a prospective OFDM signal expected at a respective signal time. Furthermore, in those embodiments, the indicators are identified if the expected magnitude of the signal power at the signal time concerned is greater than a predetermined signal power threshold level (predetermined condition).

The predetermined signal power threshold level may be the actual signal power clipping level of an amplifier in a transmitter embodying the present invention. It may, however, be advantageous to use a different level as the predetermined signal power threshold level. For example, a group of prospective OFDM signals may each have many peaks of varying magnitudes but each exceeding the actual clipping level of an amplifier in the transmitter. In that case, a large number of indicators may be identified which may lead to a high processing burden on the amplifier. Further, such peaks may be, in part, attributable to noise in a practical transmitter.

Accordingly, it may be advantageous to employ a predetermined signal power threshold level that is higher than the actual signal power clipping level of the amplifier. This will have the effect that the number of peaks in the same prospective OFDM signals that exceeds the higher threshold is reduced. This will lead to a reduced processing burden on the amplifier, and may reduce the transmitter's sensitivity to noise in a practical transmitter. It will be appreciated that a trade-off can be made in the setting of the predetermined threshold level, between, on the one hand accumulating enough indicators to distinguish between prospective OFDM signals and, on the other hand, increasing the processing burden placed on the transmitter. If the level is set too high, either no indicators will be accumulated, or only one indicator will be accumulated, that indicator representing the peak power level.

In the further embodiments of the present invention disclosed herein, the accumulation of the identified indicators produces an accumulated clipped power (ACP) value because the indicators each represent a signal power level. The ACP value may be considered to represent an expected amount of signal energy of the prospective OFDM signal that would be lost if the prospective signal was clipped at the signal power threshold level (clipping level). It will be appreciated that other accumulations may be carried out, however the result of the accumulations carried out in the further embodiments of the present invention disclosed herein will be referred to as Accumulated Clipped Powers (ACP).

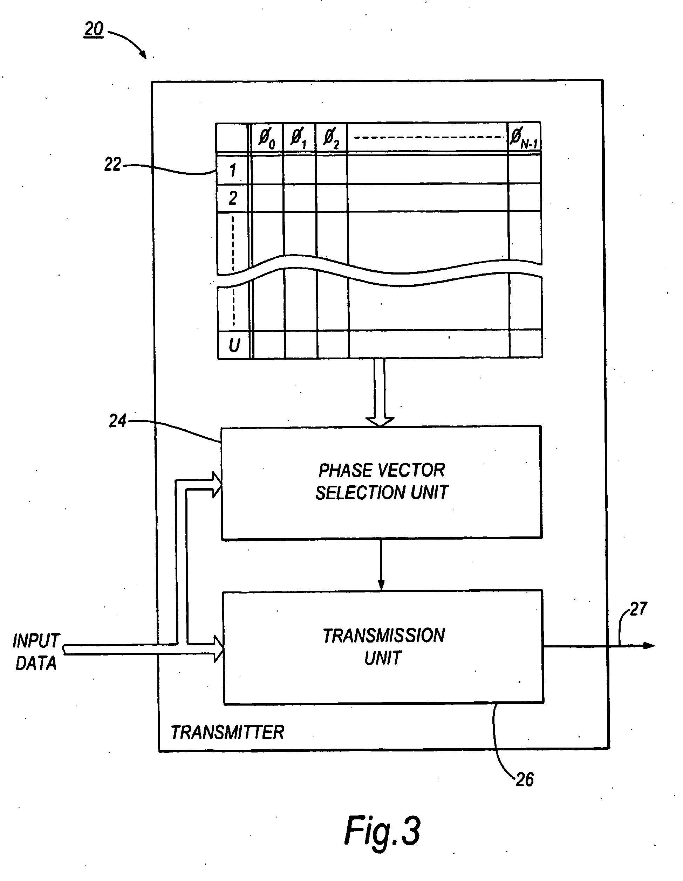

Figure 3 is a schematic diagram of parts of an OFDM transmitter 20 embodying the present invention. The OFDM transmitter 20 employs the SLM technique.

The transmitter 20 comprises an available phase vector storage unit 22, a phase vector selection unit 24, and a transmission unit 26. The available phase vector storage unit 22 stores data relating to U available phase vectors.

Each phase vector $\mathbf{P}_u$ is made up of N phase elements $\varphi_0$ $\varphi_1$, $\varphi_2$, ... , $\varphi_{N-1}$. Accordingly, $\mathbf{P}_u = [e^{j\phi_0^u}, e^{j\phi_1^u}, \cdots, e^{j\phi_{N-1}^u}]$,

where $\phi_n^u \in (0, 2\pi]$, $u \in \{1, ..., U\}$.

The phase vector selection unit 24 has access to the stored available phase vectors and also receives a block C of input data which is to be transmitted by the transmitter 20 in a particular transmission time interval (TTI). As is well known in the art, an OFDM symbol is made up of a block of N modulation symbols, and each of the N modulation symbols is transmitted using one of the N orthogonal sub-carriers. The adjacent sub-carrier separation is $\Delta f = 1/T$ where T is the OFDM signal duration (TTI duration). The resulting OFDM signal, before application of one of the U available phase vectors thereto, may be expressed as

$$s(t) = \frac{1}{\sqrt{N}} \sum_{n=0}^{N-1} c_n e^{j2\pi\Delta f t}, \qquad 0 \le t \le T \tag{1}$$

Where $\mathbf{C} = (c_0 \ c_1 \cdots c_{N-1})$ represents a vector of N constellation symbols from a constellation.

The phase vector selection unit 24 calculates the vector product of the input data vector C and each of the available phase vectors $\mathbf{P}_u$ to produce U prospective OFDM symbols.

Each prospective resulting OFDM signal, after application of one of the U available phase vectors, may be expressed as

$$s_u(t) = \frac{1}{\sqrt{N}} \sum_{n=0}^{N-1} c_n e^{j(2\pi\Delta f t + \phi_n^u)} \tag{2}$$

The time domain samples of each resulting OFDM signal are thus given by

$$\mathbf{S}(u) = [s_0(u), s_1(u), \cdots, s_{M-1}(u)]^T, \qquad u = 1 \cdots U \tag{3}$$

where M represents the number of samples.

It may be assumed that the amplitude clipping performed in the amplifier of the transmitter 20 limits the peak envelope of the input signal to a predetermined value, or otherwise passes the input signal undistorted. That is,

$$y = \begin{cases} s, & |s| < A \\ Ae^{j\phi(s)}, & |s| \ge A \end{cases} \tag{4}$$

where $\varphi(s)$ is the phase of S.

The calculation of the accumulated clipped power (ACP) for the SLM technique carried out in the transmitter 20 is defined based on the following procedure. The mean signal power $\mu$ for each prospective OFDM signal, i.e. after the application of each phase vector $\mathbf{P}_u$ of the U available phase vectors, is determined as

$$\mu = E(|s_k(u)|^2), \qquad k = 1 \cdots M \tag{5}$$

where E is an expectation/averaging function.

The clipping level $A_c$ is defined as

$$\left(A_c\right)_{dB} = \mu_{dB} + A_{dB} \qquad (6)$$

Accordingly, it can be seen that the clipping level $A_c$ (i.e. the threshold used to identify the indicators) is set at a level A above the mean signal power $\mu$ in the present embodiment. It will be appreciated, however, that the clipping level $A_c$ could be set at any level.

The Accumulated Clipped Power (ACP) for each candidate OFDM signal (i.e. for each prospective OFDM signal formed by using one respective phase vector $\mathbf{P}_u$ of the U available phase vectors) may be calculated as follows:

$$ACP_u = \sum_{k=0}^{M} \eta_k \qquad (7)$$

where

$$\eta_k = \begin{cases} \left|s_k(u)\right|^2 - A_c, when & \left|s_k(u)\right|^2 > A_c \\ 0 & Otherwise \end{cases} \qquad (8)$$

It will be appreciated that the indicators are the values $|S_k(u)|^2$, and that they are accumulated (i.e. the parts of them that exceed $A_c$ are summed) to give an ACP value in equation 7. Equation 7 serves only to accumulate identified indicators because the other indicators are effectively ignored in equation 8 (by being assigned the value 0) so that they do not affect the accumulation.

In order for the transmitter to transmit the most suitable prospective OFDM signal, i.e. the OFDM signal having the lowest ACP, the phase vector selection unit 24 accordingly selects the vector $u_{ACP}$ (i.e. $\mathbf{P}_u$, where $u = u_{ACP}$) so that the following equation is minimized.

$$\min_u \left(ACP_u\right) \qquad (9)$$

Put more simply, the one of the U available phase vectors which causes the corresponding prospective OFDM signal to have the lowest ACP is selected for use by the transmission unit 26, and that value u of U values is referred to as $u_{ACP}$.

Accordingly, the candidate OFDM symbol having the lowest ACP, i.e. using the selected phase vector $P_{u_{ACP}}$, is then transmitted by the transmission unit 26.

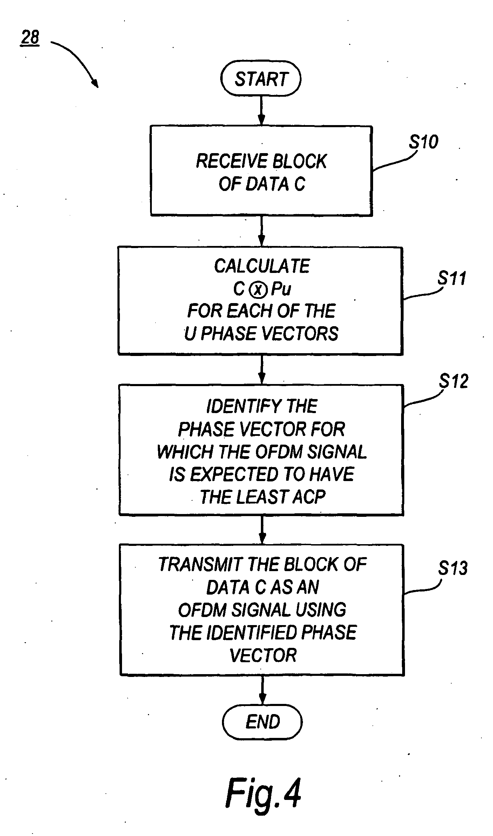

Figure 4 is a flow chart for use in explaining operations carried out in the transmitter 20. Accordingly, the flowchart for Figure 4 details a method 28 embodying the present invention. The method 30 comprises steps S10 to S13.

In step S10, the phase vector selection unit 24 receives a block C of data to be transmitted by the transmitter 20. In step S11, the phase vector selection unit 24 calculates the vector product $C \otimes P_u$ for each one of the U available phase vectors.

In step S12, the phase vector $P_{u_{ACP}}$ which generates the OFDM signal with the lowest ACP is identified, for example by applying equation (7) to calculate the ACP value expected for the application of each phase vector $\mathbf{P}_u$, and looking for the minimum ACP value. In step S13, the block of data C is transmitted as an OFDM signal 27 using the identified phase vector $P_{u_{ACP}}$.

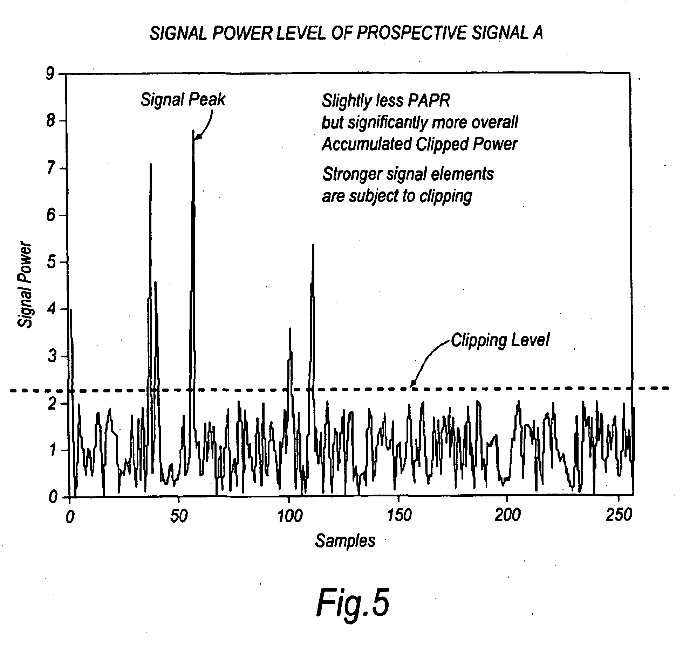

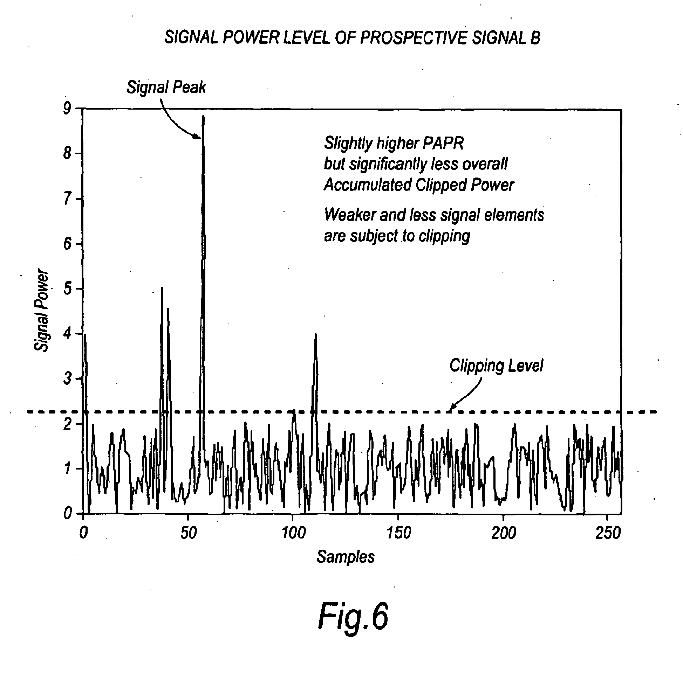

Figures 5 and 6 are example wave form diagrams of two prospective signals A and B, respectively. Figure 5 shows the expected signal power level of prospective OFDM signal A which will be transmitted by the transmitter 20 if the block of data C was combined with a first phase vector $P_1$. Figure 6 shows the expected signal power level of prospective OFDM signal B, which will be produced by combining the block of input data C with a second phase vector $P_2$. A predetermined signal power clipping level is shown on each of Figures 5 and 6, and may be the actual clipping level of an amplifier in the transmitter 20, or may be set at a different level.

By comparing Figures 5 and 6, it can been seen that the prospective signal A is expected to have a slightly lower PAPR than the prospective signal B. This can be seen because although the two signals are reasonably similar, the signal peak of the waveform in Figure 6 is higher than the signal peak in the waveform of Figure 5. Accordingly, a previously-considered OFDM transmitter employing the SLM technique and seeking to transmit the prospective OFDM signal with the lowest PAPR would choose to transmit the prospective signal A using the phase vector $P_1$, rather than the prospective signal B.

Also by comparison of Figure 5 with Figure 6, it can be seen that stronger signal elements are subject to clipping in the prospective signal A than in the prospective signal B. Accordingly, the prospective signal B has a significantly less overall ACP than the prospective signal A. Accordingly, the transmitter 20 embodying the present invention would choose to transmit the prospective signal B using the phase vector $P_2$, rather than the prospective signal A.

Simulations have been carried out to compare the operation of a previously-considered OFDM transmitter (employing the SLM technique based on direct PAPR reduction) with a transmitter embodying the present invention, for example the transmitter 20. The transmitter 20 also employs the SLM technique but based on direct ACP reduction.

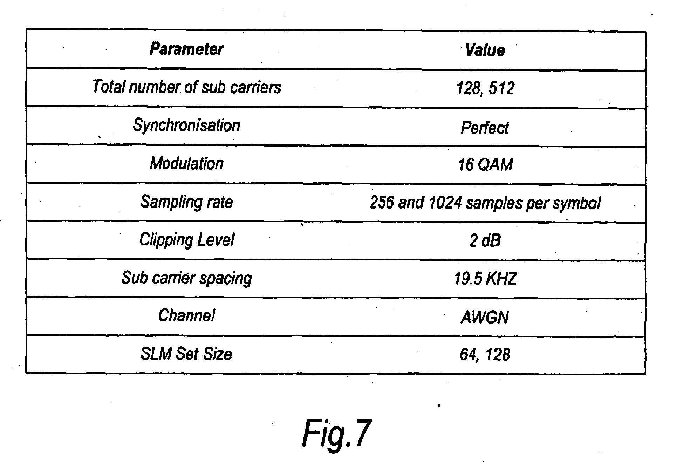

Figure 7 is a table listing the system parameters used for transmission in the simulations. Figure 7 shows that the simulations were carried out using two different transmitter configurations. Firstly, the simulations were carried out using 128 sub-carriers and an SLM set size (i.e. the total number of available phase vectors) of 64. Secondly, the simulations were carried out using 512 sub-carriers, and an SLM set size of 128. In each simulation, the synchronization was perfect, the modulation scheme used was 16 QAM, the clipping level employed was 2 dB, the sub-carrier spacing was 19.5 kHz, and the transmission channel was modelled using an AWGN (Additive White Gaussian Noise) model. Sampling rates of 256 and 1024 samples per symbol were also used in the simulations.

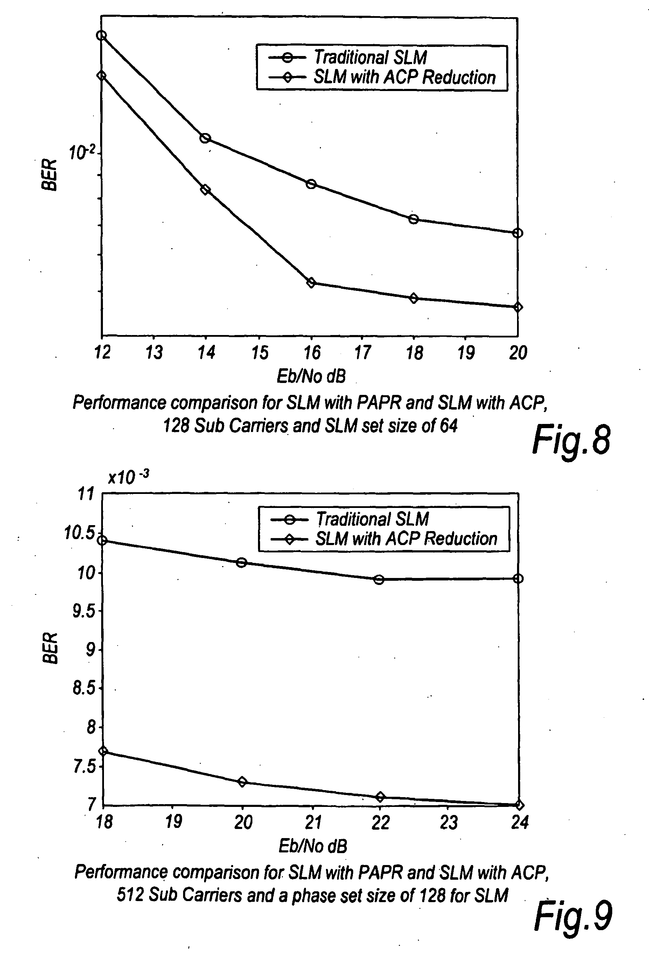

Figures 8 and 9 are graphs showing the results of the simulations to compare previously-considered "traditional" SLM employing direct PAPR reduction, with SLM employing direct ACP reduction embodying the present invention. The graph of Figure 8 shows the results of the simulations carried out using 128 sub-carriers, and a SLM set size of 64. The graph of Figure 9 shows the results of the simulations carried out using 512 sub-carriers and a SLM set size of 128.

By considering the graphs of Figures 8 and 9, it can be seen that it in each case the application of the SLM technique employing ACP reduction, as carried out by embodiments of the present invention, leads to improved BER (bit error rate) as compared to the application of the SLM technique employing direct PAPR reduction.

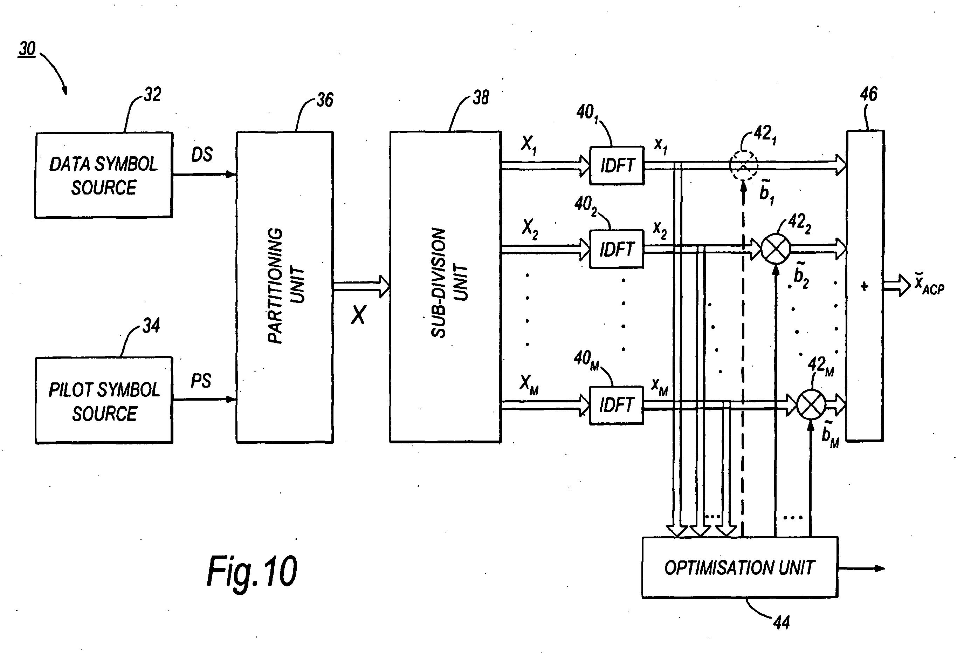

Figure 10 is a schematic diagram of parts of an OFDM transmitter 30 embodying the present invention. The OFDM transmitter 30 employs the PTS technique.

The transmitter 30 comprises a data symbol source 32, a pilot symbol source 34, a partitioning unit 36, a sub-division unit 38, a plurality of IDFT units $40_1$ to $40_M$, a plurality of multipliers $42_1$ to $42_M$, an optimisation unit 44, and a summation unit 46.

Data symbols DS for transmission are provided from the data symbol source 32, along with pilot symbols PS from the pilot symbol source 34, to the partitioning unit 36 where the symbols are partitioned into vector blocks **X** for assigning to the available N sub-carriers.

Each block **X** is output in turn from the partitioning unit 36 to the sub-division unit 38 where it is partitioned into M pairwise disjoint sub-blocks $X_m$, $1 \leq m \leq M$. All sub-carrier positions in $X_m$, which are already represented in another sub-block are set to zero, so that:

$$\mathbf{X} = \sum_{m=1}^{M} \mathbf{X}_m \qquad (10)$$

The overall process carried out in transmitter 30 seeks to alter the phase angles of the sub-carriers in each sub-block through several iterations to obtain the optimum combined output sequence, in which ACP is minimized.

The phase-angle alteration is achieved by introducing complex-valued rotation factors $b_m$, where:

$$b_m = e^{j\phi_m} \qquad (11)$$

$$\phi_m \in (0, 2\pi], \quad m \in \{1, ..., M\} \qquad (12)$$

This introduction of factors $b_m$ enables a modified sub-carrier vector:

$$\breve{\mathbf{X}} = \sum_{m=1}^{M} \mathbf{X}_m b_m \qquad (13)$$

which represents the same information as **X**, if the set $\{b_m, 1 \leq m \leq M\}$ is known. Clearly, simply a joint rotation of all sub-carriers in sub-block m by the same angle $\phi_m = arg(b_m)$ is performed.

To calculate $\breve{x} = IDFT\{\breve{X}\}$, the linearity of the IDFT is exploited. Accordingly, the sub-blocks are transformed by M separate and parallel IDFTs in the IDFT units $40_1$ to $40_M$, yielding:

$$\breve{x} = \sum_{m=1}^{M} b_m . IDFT\{X_m\} = \sum_{m=1}^{M} b_m . x_m \qquad (14)$$

where the M so-called partial transmit sequences $x_m = IDFT\{X_m\}$ have been introduced.

Based on the partial transmit sequences $x_m$, an optimisation process is carried out in the optimisation unit 44 to choose the vector **b** (being a possible set of available factors $b_m$) so that the output signal has minimum ACP. As will be described below, the optimisation unit 44 selects the optimum vector $\mathbf{b}_{ACP} = [\tilde{b}_1, \tilde{b}_2, \cdots, \tilde{b}_M]$ to be applied to the multipliers $42_1$ to $42_M$ as shown in Figure 10.

Firstly, it will be appreciated that the time domain samples of the signal $\breve{x}$ may be represented as

$$s_k = \sum_{m=1}^{M} b_m . x_{k,m} \qquad (15)$$

where $0 \leq k \leq 5$ NL-1 assuming an L-times over-sampled time domain signal.

Secondly, it is assumed that the amplitude clipping in an amplifier of the transmitter 30 limits the peak envelope of the input signal to a predetermined value or otherwise passes the input signal undistorted (in a similar way as described with respect to the transmitter 20 of Figure 3), that is,

$$y = \begin{cases} \breve{x}, & |\breve{x}| < A \\ Ae^{j\phi(\breve{x})}, & |\breve{x}| \geq A \end{cases} \qquad (16)$$

where $\phi(\breve{x})$ is the phase of $\breve{x}$.

The mean power of the signal $\breve{x}$ is determined as follows,

$$\mu = E(|s_k|^2) \qquad (17)$$

which of course depends on the chosen vector **b** be equation 15 above. Again, E is an averaging/expectation function.

The amplifier clipping level, or another level equivalent thereto, $A_c$ is defined as:

$$(A_c)_{dB} = \mu_{dB} + A_{dB} \qquad (18)$$

Accordingly, the ACP value for each vector **b**, i.e. $ACP_b$, is determined as follows:

$$ACP_{\mathbf{b}} = \sum_{k=0}^{NL-1} \eta_k \qquad (19)$$

where

$$\eta_k = \begin{cases} |s_k(\mathbf{b})|^2 - A_c, when & |s_k(\mathbf{b})|^2 > A_c \\ 0 & Otherwise \end{cases} \qquad (20)$$

The vector $\mathbf{b}_{ACP}$ is selected so that

$$\min_{\mathbf{b}}(ACP_{\mathbf{b}}) \qquad (21)$$

Accordingly, with the vector $\mathbf{b}_{ACP}$ selected, the output signal is transmitted as

$$\check{x}_{ACP} = \sum_{m=1}^{M} \tilde{b}_m . x_m \qquad (22)$$

where

$$\mathbf{b}_{ACP} = [\tilde{b}_1, \tilde{b}_2, \cdots, \tilde{b}_M] \qquad (23)$$

The output signal of equation 22 is formed in the summation unit 46 and is transmitted by the transmitter 30.
It will be appreciated that the application of the ACP technique to the PTS transmitter 30 of Figure 10 is similar to the application of the ACP technique to the SLM transmitter 20 of Figure 3.
As indicated in Figure 10 by the dashed lines, one skilled in the art will appreciate that the vector **b** may optionally be of length M -1 and applied to all but one of the M sub-blocks. That is, it can be assumed that signals for one of the sub-blocks are not phase shifted, or are shifted by a phase shift of zero. Accordingly, multiplier $42_1$ is optional in the transmitter 30.

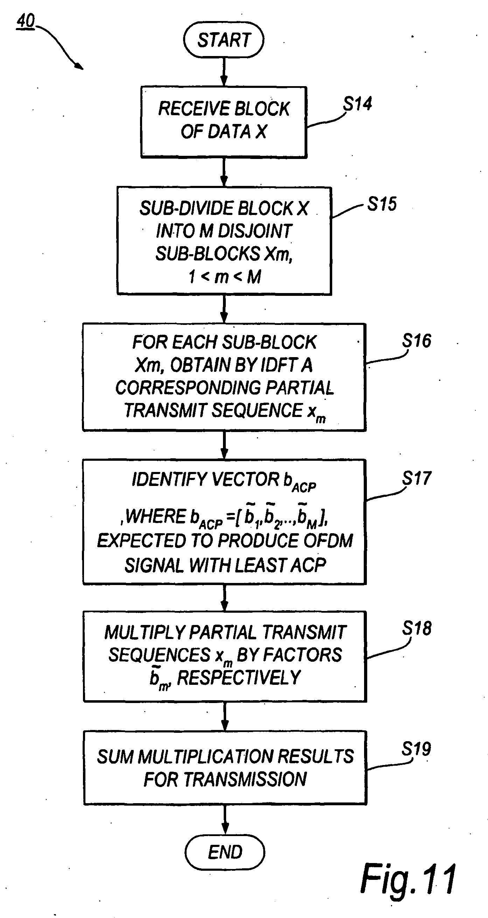

Figure 11 is a flow chart for use in explaining operations carried out in the transmitter 30. Accordingly, the flowchart for Figure 11 details a method 40 embodying the present invention. The method 40 comprises steps S14 to S19.
In step S14, a block of data **X** is received by the sub-division unit 38 from the partitioning unit 36. In step S15, the block **X** is sub-divided into M pairwise disjoint sub-blocks $X_m$. Each sub-block $X_m$ is then transformed by an IDFT in its corresponding IDFT unit $40_m$ in step S16, to produce a corresponding so-called Partial Transmit Sequence (PTS).
In step S17, a vector $\mathbf{b}_{ACP}$ is selected for use by the transmitter 30 in accordance with equation 21 above. Thus, in step S18, the partial transmit sequences $x_m$ are phase shifted by the respective phase factors $\tilde{b}_m$ of $\mathbf{b}_{ACP}$ in

the multipliers $42_m$, and in step S19 the multiplication results are summed for transmission in the addition unit 46.

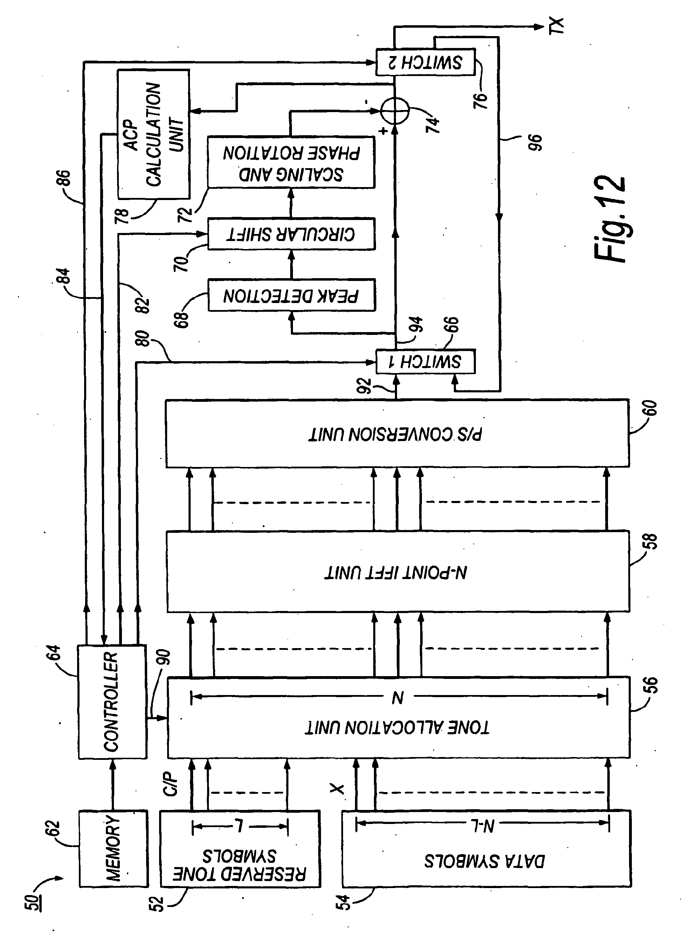

Figure 12 is a schematic diagram of parts of an OFDM transmitter 50 embodying the present invention. The OFDM transmitter 50 employs the TR technique.

The transmitter 50 comprises a tone reservation symbol source 52, a data symbol source 54, a tone allocation unit 56, an N-point IFFT unit 58, a parallel-serial conversion unit 60, a memory 62, a controller, 64, a first switch 66, a peak detection unit 68, a circular shift unit 70, a scaling and phase rotation unit 72, an adder/subtractor 74, a second switch 76, and an ACP calculation unit 78.

In the operation of transmitter 50, a number L of the N available OFDM sub-carriers are reserved. These L reserved sub-carriers are not used to carry any data information, and are only used for reducing the ACP value of the transmitted OFDM signal. It is the reservation of the L sub-carriers (or tones) that gives the Tone Reservation technique its name.

The data symbols are supplied from the data symbol source 54 to the tone allocation unit 56 as a data vector X. The tone reservation symbols are supplied from the tone reservation symbol source 52 to the tone allocation unit 56 as a vector C, hereinafter to be known as the peak reduction vector.

The data vectors X and C are configured so as to lie in disjoint frequency subspaces, i.e., $X_k = 0, k \in \{i_l,...,i_L\}$. and $C_k = 0, k \notin \{i_l,...,i_L\}$. That is, vectors X and C are of the same size but each have zero values where the other has non-zero values. Effectively, this means that the data symbols of the data vector X are transmitted over N-L of the N available sub-carriers, and the symbols of the peak reduction vector C are transmitted over the remaining L sub-carriers of the N available sub-carriers. As will be seen, this formulation is distortion less and may lead to simple decoding of the data symbols that are extracted from the eventual transmitted OFDM signal in the receiver, by focusing exclusively on the set of values $k \notin \{i_l,...,i_L\}$ at the receiver FFT output. Moreover, it allows simple optimization techniques for the computation of the peak reduction vector C. The L non-zero values in C will be called *peak reduction tones.*

In order to gain a good understanding to the transmitter 50 embodying the present invention, some background information regarding the TR technique will be briefly discussed as follows, and reference should be made to the already-mentioned paper entitled "Tone Reservation method for PAPR Reduction scheme", IEEE 802.16e-03/60rl, Sung-Eun Park et al, Samsung Elec..

Let us assume that the L tones $\{i_l,...,i_L\}$, have been fixed at the beginning of the transmission and that they won't be changed until the transmission is over or some new information about the channel is fed back to the transmitter. That is, let us assume that the L chosen sub-carriers are fixed for the present discussion. However, it will be appreciated that different distributions of the L tones are possible.

Calling $\check{C}$ the nonzero values of C , i.e., $\check{C} = [C_{i_l}...C_{i_L}]^T$ and $\hat{Q} = [q_{i_l}|...|q_{i_L}]$ the submatrix of Q constructed by choosing its columns $\{i_l,...,i_L\}$, then $c = QC = \hat{Q}\check{C}$. In a previously-considered OFDM transmitter employing the TR technique in conjunction with direct PAPR reduction, to minimize the PAPR of $x + c$ we must compute the vector $c^*$ that minimizes the maximum peak value, i.e.:

$$\min_{c}\|x + c\|_{\infty} = \min_{\hat{c}}\|x + \hat{Q}\hat{C}\|_{\infty} \qquad (24)$$

A gradient algorithm is one preferred solution for computing $c^*$ with low complexity. The basic idea of the gradient algorithm is an iterative process of clipping the prospective OFDM signal. As is well known in the art, amplifiers are typically unable to handle signals outside their linear range. Accordingly, it can be advantageous to clip the prospective OFDM signal peaks to a clipping level in the time domain. This clipping can be interpreted as subtracting an impulse function from the OFDM signal, the impulse having been time shifted to the location of the signal peak to be clipped, and scaled so that the power of the peak tone should be reduced to the desired target clipping level.

The use of an ideal impulse function is disadvantageous, since such an impulse function has frequency components at all sub-carrier frequencies. That is, the subtraction of a pure impulse function from the prospective OFDM signal in the time domain will affect all of the sub-carrier symbols of the corresponding OFDM symbol in frequency domain. That is, this subtraction in the time domain will alter not only C but also X.

To overcome this problem, an impulse-like function is designed, which only has frequency values in the reserved tone locations, i.e. in the L tone locations $\{i_l,...,i_L\}$.

Accordingly, in the present embodiment of the present invention, a particular vector **P** is employed and may be input via the tone reservation symbol source 52 as a preferred version of the peak reduction vector **C**, or may only be employed by the transmitter 50 in it's IFFT output form **p** as discussed below. Preferably, both **P** and **C** are input to the transmitter 50. The vector **P** may be defined as $P_k = 1, k \in \{i_l,...,i_L\}$ and $P_k = 0, k \notin \{i_l,...,i_L\}$. Also, the IFFT output of **P**, i.e. **p**, may be defined as $P = [P_0 P_1...P_{N-1}]$. That is, **p** is the IFFT output of the vector **P** whose value is 1 at the tone locations $\{i_l,...,i_L\}$, and 0 elsewhere. **p** will be reffered to as the *peak reduction kernel* and is, in frequency; only a function of the tone locations $\{i_l,...,i_L\}$.

As the peak reduction kernel **p** is independent of the data symbols, it can be calculated in advance of normal operation of the transmitter 50 and stored in the memory 62. It will of course be appreciated that as the peak reduction kernel **p** is a function of the tone locations $\{i_l,...,i_L\}$, i.e. of the sub-carriers chosen to transmit the reserved tones, a different peak reduction kernel **p** is required for each different selection of the L reserved tones (sub-carriers) from the N available tones (sub-carriers). Accordingly, a number of different peak reduction kernels **p** may be stored in the memory 62, each corresponding to a different selection of the L reserved tones.

It will be appreciated that the peak reduction kernel **p** will have its peak at the location $p_0$ but will also have some leakage at the locations $p_1 \cdots p_{N-1}$. As the number of the reserved tones L becomes larger, the peak at the location $p_0$ will of course become larger and the leakage at the locations $p_1 \cdots p_{N-1}$ will become smaller, leading to a better performance of the transmitter. Conversely, however, as the number L becomes larger, the system redundancy increases, as fewer of the N sub-carriers are used to carry data. This leads to a decrease in system throughput. Accordingly, a trade-off between performance and system throughput must be made when selecting the number L.

Based on the above explanation, the memory 62 of the transmitter 50 stores one or more peak reduction kernels **p**, each relating to a different set of L sub-carriers that may be chosen as the reserved tones. During operation, the controller 64 supplies a signal 90 to the tone allocation unit 56 to control which L sub-carriers are used as reserved tones. The controller 64 also accesses the memory 62 to supply the corresponding peak reduction kernel **p** to the circular shift unit 70 via signal line 82.

The operation of the transmitter may therefore proceed with either the peak reduction vector **C**, or the vector **P** corresponding to the chosen peak reduction kernel **p**, being supplied to the tone allocation unit 56 with the data vector **X**. An N-point IFFT is carried out by the N-Point IFFT Unit 58, and the results are parallel-serial converted in the parallel-serial conversion unit 60.

At this time, the controller 64 controls the first switch 66 via signal line 80 such that the time-domain output signal of the parallel-serial conversion unit 60 passes from signal line 92 to signal line 94. A gradient algorithm is hereinafter performed on the output of the parallel-serial conversion unit 60 until the signal has an acceptable ACP value, at which point it is transmitted.

The gradient algorithm is an iterative clipping algorithm using the chosen peak reduction kernel **p**. The original output signal (OP1) passes from signal line 94 to the peak detection unit 68 where a peak (or several peaks) to be eliminated therefrom is/are detected. For the present explanation, however, it will be assumed that only one peak is to be eliminated during each iteration. Information derived from the peak detection unit 68 is used to circular shift, scale, and phase rotate the chosen peak reduction kernel **p**, supplied via signal line 82, in the time domain. This shifting, scaling and phase rotating is carried out such that the peak of the chosen peak reduction kernel **p** is aligned with the detected peak in the output signal, and has a magnitude equal to the magnitude of the output signal above the clipping level at that point. This shifted, scaled and phase-rotated version of the chosen peak reduction kernel **p** is subtracted from the original output signal OP1 by the adder/subtracter 74 to produce a modified output signal OP2.

As the vector **P** which produced the chosen peak reduction kernel **p** only has values at the tone locations $\{i_l,..., i_L\}$, this shifting, scaling and phase rotating in the time domain only affects the values at those tone locations (sub-carriers), and the other tones (sub-carriers) remained unchanged. That is, importantly, the data vector **X** remains present in the modified output signal OP2 and is not affected by the iterative clipping operations.

The ACP calculation unit 78 obtains an ACP value for the modified output signal OP2 and supplies this to the controller 64 via signal line 84. The ACP value can be obtained from the samples of the output signal $S_k$ in a similar way as carried out by the previously-described embodiments of the present invention. For example, the ACP value for a particular output signal having samples $S_k$ may be determined as follows:

$$ACP = \sum_{k=0}^{K-1} \eta_k \qquad (25)$$

where K is the total number of samples for the particular output signal, and where

$$\eta_k = \begin{cases} |s_k|^2 - A_c, when & |s_k|^2 > A_c \\ 0 & Otherwise \end{cases} \qquad (26)$$

and where the clipping level $A_c$ is:

$$(A_c)_{dB} = \mu_{dB} + A_{dB} \qquad\qquad (27)$$

given that the mean signal power is determined as

$$\mu = E(|s_k|^2), \qquad k = 1 \cdots M \qquad\qquad (28)$$

If the ACP value is considered acceptable, the controller 64 controls the second switch 76 via signal line 86 to pass the modified output signal OP2 on for transmission. Otherwise, the second switch 76 is controlled to pass the modified output signal OP2 along signal line 96 back to the first switch 66. At this time, the first switch 66 is controlled to pass the input from signal line 96 onto signal line 94. Accordingly, the iterative process is continued and a further modified output signal OP3 is obtained. Importantly, the data vector **X** remains present in the further modified output signal OP3, and in all further modified output signals, and is not affected by the iterative clipping operations.

The iterative clipping operations are carried out either until the modified output signal has an acceptable ACP value, or until a set number of iterations have been carried out. The final modified output signal is then passed on for transmission.

It will be appreciated that, in another embodiment of the present invention, the ACP value of the original output signal OP1 may be obtained before application of the gradient algorithm. In that case, it is possible that signal OP1 may have an acceptable ACP value and, accordingly, the signal OP1 could then be transmitted without application of the gradient algorithm. It will further be appreciated that the optimization is carried out on the time domain signal. Accordingly, only one IFFT operation is needed and the complexity is very low.

The gradient algorithm may be considered, for the purpose of implementation, to be an operation carried out on the time domain signal c, i.e. the IFFT output from the vector C, by the following formulas:

$$c^{(k+l)} = c^{(k)} - \alpha_k p[((n - n_k))_N] \qquad\qquad (29)$$

$$n_k = \underset{n}{Argmax}\,|x_n + c_n{}^{(k)}| \qquad\qquad (30)$$

where $\alpha_k$ is a scale and phase rotation factor depending on the maximum peak found at iteration *k*. The notation $p[((n-n_k))_N]$ means that the peak reduction kernel p has been circularly shifted in time by a value of $n_k$.

This kernel has its maximum in the time domain at *n* = 0 and, as explained above, its aim is to decrease the high peak found at $n_k$, without increasing the other values of the OFDM symbol at $n \neq n_k$ too much. So the selection of the tone location $\{i_l,...,i_L\}$ is a critical point of the ACP reduction performance. A pertinent choice for **p** and therefore for the reserved tones is obtained by minimizing its secondary peak.

The gradient algorithm may alternatively be considered, for the purpose of implementation, to be an exercise of the following iterative formula:

$$\mathbf{x}^{i+1} = \mathbf{x}^i - \mu \cdot \sum_{|x_n^i| > A} \alpha_n^i \mathbf{p}_n \qquad\qquad (31)$$

where:

i is the iteration index;
$\mu$ is the updating step size;

n is the index for which sample $x_n$ is greater than the clipping threshold; $\alpha_n^i = x_n^i - A \cdot \exp(j \cdot angle(x_n^i))$ ; and

**p** is called peak reduction kernel vector.

As already discussed, the kernel is a time domain signal that is as close as possible to the ideal impulse at the location where the sample amplitude is greater than the predefined threshold. This way the peak could be cancelled as much as possible without generating secondary peaks.

It will be appreciated that the operation of the transmitter 50 can be simplified by taking advantage of the memory 62. That is, instead of providing a scaling and phase rotation unit 72, the possible phase rotation space can be divided equally into s parts, and the possible amplitude space can be divided into t parts represented by some special values according to different FFT size and step length. For example, if FFT size is 1024, the phase is divided equally into six parts (i.e. s = 6) represented by $\pm\pi/6, \pm\pi/2, \pm5\pi/6$ and the amplitude can be chosen among 0.01, 0.04, 0.08, 0.12, 0.16, (i.e. t = 5). It can be seen that t x s combinations of the phase shifts and the amplitudes exist, and these modifications of the peak reduction kernel **p** can be stored in advance. In the present example, only 30 peak reduction kernels need to be stored (5 x 6 = 30).

It can be seen that possible gradient algorithm equation 31 seeks to cancel all peaks that satisfy $|x_{n_i}| > A$ in each iteration cycle, rather than just one peak as described above with reference to Figure 12. It can therefore be seen that a balance can be achieved in the computational burden on the transmitter 50 by choosing a fixed number of peaks to be cancelled in one iteration instead of all the peaks that satisfy $|x_{n_i}| > A$.

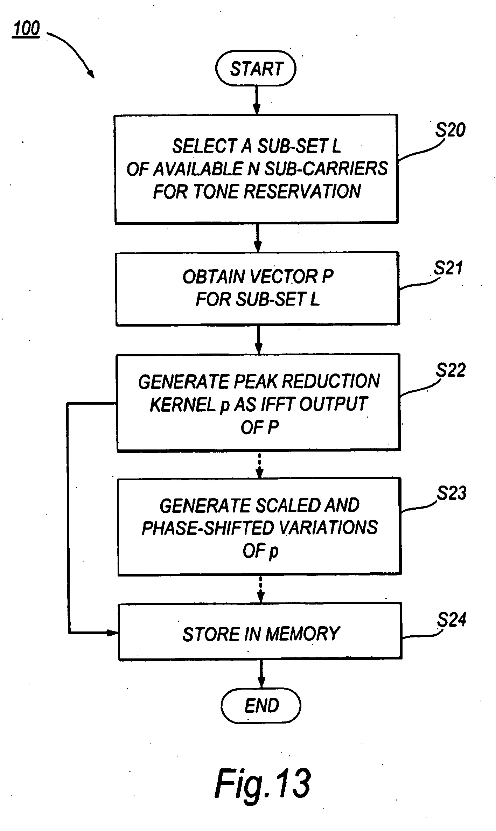

Figure 13 is a flow chart for use in explaining operations carried out in the transmitter 50. Accordingly, the flow chart of Figure 13 details a method 100 for use in an embodiment of the present invention. The method 100 may be carried out in advance of "normal" operation of the transmitter 50. For example, the method 100 may be carried out when the transmitter 50 is offline. The method 100 comprises steps S20 to S24.

In step S20, a sub-set L of the available N sub-carriers of the transmitter 50 is selected for tone reservation. The sub-set L need not be adjacently located sub-carriers, and may instead be distributed evenly, or unevenly, across the available N sub-carriers. That is, the L sub-carriers are not used for the transmission of data, and are used only to optimise the ACP value of the transmitted OFDM signal.

In step S21, a vector **P** is obtained for the selected **L** sub-carriers. As mentioned above with reference to Figure 12, the obtained vector **P** has a value of 1 for each of the L reserved sub-carriers, and a value of 0 for each of the remaining N-L sub-carriers. In step S22, a peak reduction kernel **p** is generated by performing an IFFT on the vector **P**. The method then may proceed to step S24 in which the peak reduction kernel **p** is stored in the memory 62 of the transmitter 50.

Optionally, the method 100 may proceed from step S22 to step S24 via step S23. In step S23, a plurality of scaled and phase-shifted variations of the peak reduction kernel **p** are generated. For example, 30 variations may be generated as per the example provided in respect of Figure 12. The variations of the peak reduction kernel **p** may also be stored in the memory 62 of the transmitter 50 in step S24 of the method 100.

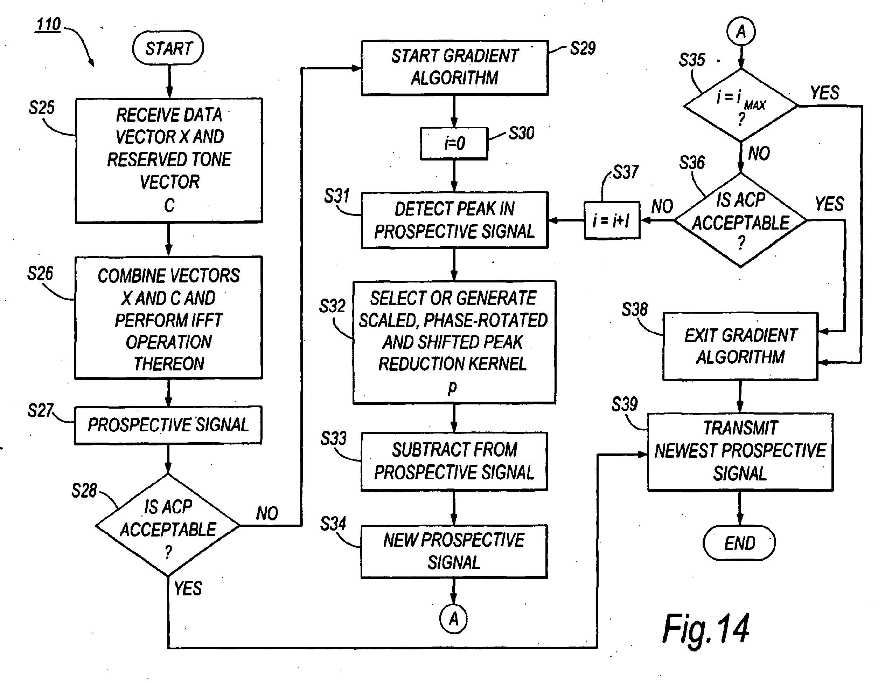

Figure 14 is a flow chart for use in explaining operations carried out in the transmitter 50. The flow chart of Figure 14 details a method 110 embodying the present invention. The method 110 may be carried out during normal operation of the transmitter 50, for example when the transmitter 50 is online. The method 110 comprises steps S25 to S39.

In step S25, the data vector **X** and the reserved tone vector **C** are received. In step S26 the vectors **X** and **C** are combined and an IFFT operation is performed thereon, to produce a prospective OFDM signal S27. It will be appreciated that the vector **C** could optionally be identical to the vector **P** of step S21 of method 100.

In step S28, a decision is made as to whether the prospective signal of step S27 is acceptable for transmission. This decision is made by determining its ACP value, and by assessing whether this ACP value is acceptable. The ACP value may be determined by employing equations 25 to 28 above. The acceptability of the determined ACP value may be decided by comparing it to a target ACP value considered acceptable.

If the prospective signal of step S27 is acceptable for transmission, the method 100 proceeds to step S39 in which the prospective signal of step S27 is transmitted. The method 110 then terminates. If, however, the ACP value of the prospective signal of step S27 shows that the prospective signal of step S27 is not acceptable for transmission, the method 110 proceeds to step S29, in which a gradient algorithm is initiated.

In step S30, a counter i is set to zero. In step S31, a peak, or peaks, in the newest prospective signal (in this case the prospective signal of step S27) is detected. In step S32, the peak reduction kernel **p** stored in the memory 62 of the transmitter 50 is scaled, phase-rotated, and shifted so as to be correctly positioned to clip one or more of the detected peaks in the prospective signal. It will of course be appreciated that in step S32, the scaled, phase-rotated and shifted peak-reduction kernel may be selected from the memory 62 of the transmitter 50, rather than generated. This selection, rather than generation, be carried out, for example, if the method 100 has already generated the necessary variations of the peak reduction kernel in step S23, and stored them in the memory 62 in step S24.

In step S33, the scaled, phase-rotated and shifted peak reduction kernel is subtracted from the most recent prospective signal (in this case, the prospective signal of step S27) thereby producing a new prospective signal in step S34.

In step S35, a decision is made as to whether the counter i is equal to a maximum value $i_{MAX}$. That is, in step S35 a decision is made as to whether the method 110 has passed through steps S31 to S34 a certain number of times. If i = $i_{MAX}$, the method proceeds to step S38, in which the gradient algorithm is terminated, and the newest prospective signal (in this case the prospective signal of step S34) is transmitted in step S39. If, however, i ≠ $i_{MAX}$, the method 110 proceeds to step S36, in which a decision is made as to whether the most recent prospective signal has an ACP value that is acceptable. If the most recent (newest) prospective signal has an acceptable ACP value, the method proceeds to step S38 in which the gradient algorithm is terminated, and the newest prospective signal is transmitted in step S39.

If, in step S36, it is determined that the most recent prospective signal does not have an acceptable ACP value, the method proceeds to step S37, in which the counter i is incremented (i.e. by performing **i** = i + 1). The method then proceeds to step S31, in which the gradient algorithm is run for a second time. The method 110 then proceeds through steps S32 to S34 as described above.

It will be appreciated that the method 110 will continue to cycle through steps S31 to S34 until a positive outcome is obtained from either step S35 or step S36. The repeating steps S31 to S34 therefore carry out the iterative function of the gradient algorithm.

Possible implementations of the methods 100 and 110 can be summarised as follows:

- *Off line computation (method 100, Figure 13):*

  1. Calculate the original kernel vector **p** based on 2-norm criteria, which is the IFFT of $\mathbf{1}_K$ (all tones except guard band);
  2. Quantify the original kernel to get derived kernels and store them in advance (for example, in memory 62).

- *Online iterations(method 110, Figure 14):* This algorithm is based on each input OFDM symbol.

  1. Select the target ACP value and corresponding threshold *A* , the threshold which corresponds to the clipping level of the amplifier. Note that the threshold A may correspond to a different level to the actual clipping level of the amplifier;
  2. Initially, set $\mathbf{x}^0 = \mathbf{x}$ ;
  3. For the entire samples of a symbol determine the ACP for the locations $n_i$ in which $|x_{n_i}| > A$.
  4. If the overall ACP is below the target threshold, transmit $\mathbf{x}^i$. Otherwise, search in the derived kernels to find matched one and right circle shift in time domain;
  5. Update $\mathbf{x}^i$ according to Equation 17;
  6. Repeat steps 3 to step 5 until i reaches maximum iteration limit, and transmit the final $\mathbf{x}^i$.

It will of course be appreciated that embodiments of the present invention employ an ACP technique, in which an Accumulated Clipped Power measurement is taken of a prospective OFDM signal. It will further be appreciated that embodiments of the present invention seek to reduce an ACP value of a transmitted signal by selecting for transmission a prospective OFDM from a plurality of prospective OFDM signals with the lowest, or with an acceptable, ACP value. The equations 25 to 28 disclosed above may be seen as generic ACP calculating equations, which may be employed in any OFDM transmitter. Accordingly, the use of an ACP value as a tool for selecting a prospective OFDM from a plurality of prospective OFDM signals may be applied to any OFDM transmitter, other than the SLM, PTS, and TR OFDM transmitters disclosed herein. Such transmitters, and the methods used therein would accordingly embody the present invention.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality of a transmitter embodying the present invention. The invention may also be embodied as one or more device or apparatus programs (e.g. computer programs and computer program products) for carrying out part or all of any of the methods described herein. Such programs embodying the present invention may be stored on computer-readable media, or could, for example, be in the form of one or more signals. Such signals may be data signals downloadable from an Internet website, or provided on a carrier signal, or in any other form.

It will be appreciated that embodiments of the present invention render SLM and PTS techniques more feasible when large numbers of sub carriers are involved. The prohibitive complexity of mathematical operations and signalling in this case can be reduced.

As shown in Figures 8 and 9, embodiments of the present invention break the performance limit of the "traditional" SLM technique in which direct PAPR reduction is sought. That is, such embodiments exceed the BER performance of the traditional technique and thus achieve improvement of amplifier behaviour in a transmitter with the same number U of phase vectors and negligible increased processing power. Accordingly, a reduced number U could be used in SLM embodiments of the present invention to gain the same performance as in traditional SLM transmitters, in which direct PAPR reduction is sought.

Embodiments of the present invention also break the performance limit of the "traditional" PTS technique in which direct PAPR reduction is sought. That is, such embodiments exceed the BER performance of the traditional technique and thus achieve improvement of amplifier behaviour in a transmitter with the same number of sub-blocks, IFFT processing blocks, and sets of phase factors. Accordingly, a reduced number of sub-blocks, IFFT processing blocks, and sets of phase factors could be used in PTS embodiments of the present invention to gain the same performance as in traditional PTS transmitters, in which direct PAPR reduction is sought.

Similarly, embodiments of the present invention also break the performance limit of the "traditional" TR technique in which direct PAPR reduction is sought. The gradient algorithm is stopped at a point where a prospective OFDM signal having an acceptable ACP value, rather than an acceptable PAPR value. Simulations show that this operation will lead to a better overall BER.

It can thus be appreciated that embodiments of the present invention can operate with a lower overall transmit power, and thus with a reduced battery power consumption as compared with existing OFDM transmitters, whilst retaining at least the same level of performance.

It is envisaged that embodiments of the present invention may be employed in, for example, WiMAX and LTE UTRAN systems.

**Claims**

1. A transmission method for use in an OFDM transmitter, the method comprising:

   obtaining (S1) a plurality of indicators for a prospective OFDM signal, each indicator of said plurality of indicators being indicative of a magnitude of a predetermined property of its prospective OFDM signal expected at a respective signal time;
   identifying (S2) each indicator of said plurality of indicators which indicates that the expected magnitude at the signal time concerned satisfies a predetermined condition;
   accumulating (S3) the identified indicators;
   assessing (S4) the suitability of said signal for transmission in dependence upon a result of said accumulation; and
   transmitting (S5) either said signal or another prospective OFDM signal in dependence upon the assessed suitability.

2. A transmission method according to claim 1, comprising performing said obtaining, identifying, accumulating and assessing steps for a plurality of prospective OFDM signals, and transmitting one of said prospective OFDM signals in dependence upon the respective suitabilities of those signals for transmission.

3. A transmission method according to any preceding claim, wherein said predetermined condition is that the magnitude of the indicator concerned is greater than a predetermined threshold level.

4. A transmission method according to any preceding claim, wherein each said indicator is indicative of a power level of its prospective OFDM signal.

5. A transmission method according to claim 3 or 4, wherein said predetermined threshold level is a power threshold level.

6. A transmission method according to claim 5, wherein said power threshold level is equal to a clipping level of an amplifier in said transmitter at which the amplifier ceases to operate linearly.

7. A transmission method according to claim 5, wherein said power threshold level is higher than a clipping level of an amplifier in said transmitter at which the amplifier ceases to operate linearly.

8. A transmission method according to any preceding claim, wherein the or each prospective OFDM signal is defined at a plurality of sample times, the method comprising obtaining, for the or each prospective signal, an indicator for each such sample time.

9. A transmission method according to any one of claims 3 to 8, wherein the magnitude of each identified indicator exceeds the predetermined threshold level by a respective excess amount, and wherein the or each accumulating step comprises summing the excess amounts for the identified indicators obtained for the prospective OFDM signal concerned.

10. A transmission method according to any preceding claim, wherein the or each assessing step comprises comparing the result of the accumulation concerned with a target value, and determining that the OFDM signal concerned is suitable for transmission if that result is below the target value.

11. A transmission method according to any one of claims 2 to 9, wherein the or each assessing step comprises comparing the result of the accumulation concerned with the result of at least one other accumulation, and determining that the OFDM signal concerned is suitable for transmission if that result is smaller than at least that other result.

12. A transmission method according to any preceding claim, further comprising employing a phase adjustment technique in which two or more prospective OFDM signals are formed from the same set of symbols by applying different sets of phase adjustments thereto.

13. A transmission method according to claim 12, wherein said phase adjustment technique is a selective mapping technique.

14. A transmission method according to any one of claims 1 to 12, further comprising employing a phase adjustment technique in which two or more prospective OFDM signals are formed from the same set of data sequences by applying a different set of phase adjustments thereto, wherein:

   each sequence of the set of sequences is the inverse Fourier transform of a corresponding sub-block of symbols; and
   for each said prospective OFDM signal, each phase adjustment of the set of phase adjustments concerned is applied to a different one of said sequences.

15. A transmission method according to claim 14, wherein said phase adjustment technique is a partial transmit sequence technique.

16. A transmission method according to any one of claims 1 to 12, further comprising employing a reservation technique in which a plurality of the available sub-carriers are reserved for signal adjustment, wherein the or each prospective OFDM signal is formed during a cycle of an iterative process performed on an initial OFDM signal, said process comprising, In a first cycle, subtracting a signal having no substantial frequency components in unreserved sub-carriers from the initial OFDM signal to form one said prospective OFDM signal and, in second and successive cycles, subtracting the or another signal also having no substantial frequency components in unreserved sub-carriers from the prospective OFDM signal formed in the preceding cycle to form another said prospective OFDM signal.

17. A transmission method according to claim 16, wherein said reservation technique is a tone reservation technique.

18. An OFDM transmitter, comprising:

   indicator obtaining means (4) operable to obtain a plurality of indicators for a prospective OFDM signal, each indicator of said plurality of indicators being indicative of a magnitude of a predetermined property of its prospective OFDM signal expected at a respective signal time;
   identification means (8) operable to identify each indicator of said plurality of indicators which indicates that the expected magnitude at the signal time concerned satisfies a predetermined condition;
   accumulating means (10) operable to accumulate the identified indicators;
   assessing means (12) operable to assess the suitability of said signal for transmission in dependence upon a result of said accumulation; and
   transmitting means (14) operable to transmit either said signal or another prospective OFDM signal in dependence upon the assessed suitability.

**EP 1 838 062 B1**

**Patentansprüche**

1. Sendeverfahren zum Gebrauch in einem OFDM-Sender, welches Verfahren umfasst:

   Erlangen (S1) einer Vielzahl von Indikatoren für ein künftiges OFDM-Signal, wobei jeder Indikator von der Vielzahl von Indikatoren eine Größe einer vorbestimmten Eigenschaft seines künftigen OFDM-Signals angibt, die zu einer jeweiligen Signalzeit erwartet wird;
   Identifizieren (S2) jedes Indikators von der Vielzahl von Indikatoren, der angibt, dass die erwartete Größe zur betreffenden Signalzeit einer vorbestimmten Bedingung entspricht;
   Akkumulieren (S3) der identifizierten Indikatoren;
   Bewerten (S4) der Eignung des Signals zum Senden in Abhängigkeit von einem Resultat der Akkumulierung; und
   Senden (S5) entweder des genannten Signals oder eines anderen künftigen OFDM-Signals in Abhängigkeit von der bewerteten Eignung.

2. Sendeverfahren nach Anspruch 1, welches das Ausführen der genannten Erlangungs-, Identifizierungs-, Akkumulierungs- und Bewertungsschritte für eine Vielzahl von künftigen OFDM-Signalen und das Senden eines der künftigen OFDM-Signale in Abhängigkeit von den jeweiligen Eignungen jener Signale zum Senden umfasst.

3. Sendeverfahren nach einem vorhergehenden Anspruch, bei dem die vorbestimmte Bedingung die ist, dass die Größe des betreffenden Indikators größer als ein vorbestimmter Schwellenpegel ist.

4. Sendeverfahren nach einem vorhergehenden Anspruch, bei dem jeder genannte Indikator einen Leistungspegel seines künftigen OFDM-Signals angibt.

5. Sendeverfahren nach Anspruch 3 oder 4, bei dem der vorbestimmte Schwellenpegel ein Leistungsschwellenpegel ist.

6. Sendeverfahren nach Anspruch 5, bei dem der Leistungsschwellenpegel einem Abschneidpegel eines Verstärkers in dem Sender gleich ist, bei dem der Verstärker aufhört, linear zu arbeiten.

7. Sendeverfahren nach Anspruch 5, bei dem der Leistungsschwellenpegel höher als ein Abschneidpegel eines Verstärkers in dem Sender ist, bei dem der Verstärker aufhört, linear zu arbeiten.

8. Sendeverfahren nach einem vorhergehenden Anspruch, bei dem das oder jedes künftige OFDM-Signal zu einer Vielzahl von Abtastzeiten definiert ist, welches Verfahren das Erlangen, für das oder jedes künftige Signal, eines Indikators für jede derartige Abtastzeit umfasst.

9. Sendeverfahren nach einem der Ansprüche 3 bis 8, bei dem die Größe jedes identifizierten Indikators den vorbestimmten Schwellenpegel um einen jeweiligen Überschreitungsbetrag überschreitet und bei dem der oder jeder Akkumulierungsschritt das Summieren der Überschreitungsbeträge bei den identifizierten Indikatoren umfasst, die für das betreffende künftige OFDM-Signal erlangt wurden.

10. Sendeverfahren nach einem vorhergehenden Anspruch, bei dem der oder jeder Bewertungsschritt das Vergleichen des Resultats der betreffenden Akkumulierung mit einem Zielwert umfasst, sowie das Bestimmen, dass das betreffende OFDM-Signal zum Senden geeignet ist, falls jenes Resultat unter dem Zielwert liegt.

11. Sendeverfahren nach einem der Ansprüche 2 bis 9, bei dem der oder jeder Dewertungsschritt das Vergleichen des Resultats der betreffenden Akkumulierung mit dem Resultat wenigstens einer anderen Akkumulierung umfasst, sowie das Bestimmen, dass das betreffende OFDM-Signal zum Senden geeignet ist, falls jenes Resultat kleiner als wenigstens jenes andere Resultat ist.

12. Sendeverfahren nach einem vorhergehenden Anspruch, das ferner die Verwendung einer Phaseneinstelltechnik umfasst, bei der zwei oder mehrere künftige OFDM-Signale aus demselben Satz von Symbolen gebildet werden, indem verschiedene Sätze von Phaseneinstellungen darauf angewendet werden.

13. Sendeverfahren nach Anspruch 12, bei dem die Phaseneinstelltechnik eine selektive Mapping-Technik ist.

14. Sendeverfahren nach einem der Ansprüche 1 bis 12, das ferner die Verwendung einer Phaseneinstelltechnik umfasst, bei der zwei oder mehrere künftige OFDM-Signale aus demselben Satz von Datensequenzen gebildet werden, indem ein verschiedener Satz von Phaseneinstellungen darauf angewendet wird, bei dem:

jede Sequenz des Satzes von Sequenzen die inverse Fourier-Transformation eines entsprechenden Subblocks von Symbolen ist; und
für jedes genannte künftige OFDM-Signal jede Phaseneinstellung des betreffenden Satzes von Phaseneinstellungen auf eine verschiedene der Sequenzen angewendet wird.

15. Sendeverfahren nach Anspruch 14, bei dem die Phaseinestelltechnik eine Partialsendesequenztechnik ist.

16. Sendeverfahren nach einem der Ansprüche 1 bis 12, das ferner die Verwendung einer Reservierungstechnik umfasst, bei der eine Vielzahl der verfügbaren Subträger für die Signaleinstellung reserviert wird, bei dem das oder jedes künftige OFDM-Signal während eines Zyklus eines iterativen Prozesses gebildet wird, der an einem anfänglichen OFDM-Signal ausgeführt wird, welcher Prozess, in einem ersten Zyklus, das Subtrahieren eines Signals, das keine wesentlichen Frequenzkomponenten in nichtreservierten Subträgern hat, von dem anfänglichen OFDM-Signal umfasst, um solch ein künftiges OFDM-Signal zu bilden, und, in zweiten und nachfolgenden Zyklen, das Subtrahieren des oder eines anderen Signals, das auch keine wesentlichen Frequenzkomponenten in nichtreservierten Subträgern hat, von dem künftigen OFDM-Signal, das in dem vorhergehenden Zyklus gebildet wurde, um solch ein anderes künftiges OFDM-Signal zu bilden.

17. Sendeverfahren nach Anspruch 16, bei dem die Reservierungstechnik eine Tonreservierungstechnik ist.

18. OFDM-Sender mit:

einem Indikatorerlangungsmittel (4), das betriebsfähig ist, um eine Vielzahl von Indikatoren für ein künftiges OFDM-Signal zu erlangen, wobei jeder Indikator von der Vielzahl von Indikatoren eine Größe einer vorbestimmten Eigenschaft seines künftigen OFDM-Signals angibt, die zu einer jeweiligen Signalzeit erwartet wird;
einem Identifizierungsmittel (8), das betriebsfähig ist, um jeden Indikator von der Vielzahl von Indikatoren zu identifizieren, der angibt, dass die erwartete Größe zu der betreffenden Signalzeit einer vorbestimmten Bedingung entspricht;
einem Akkumulierungsmittel (10), das betriebsfähig ist, um die identifizierten Indikatoren zu akkumulieren;
einem Bewertungsmittel (12), das betriebsfähig ist, um die Eignung des Signals zum Senden in Abhängigkeit von einem Resultat der Akkumulierung zu bewerten; und
einem Sendemittel (14), das betriebsfähig ist, um entweder das genannte Signal oder ein anderes künftiges ORDM-Signal in Abhängigkeit von der bewerteten Eignung zu senden.

**Revendications**

1. Procédé de transmission utilisé dans un émetteur OFDM, procédé comportant :

l'obtention (S1) d'une pluralité d'indicateurs pour un signal OFDM possible, chaque indicateur de ladite pluralité d'indicateurs étant représentatif d'une amplitude d'une propriété prédéterminée de son signal OFDM possible attendu à un temps de signal respectif ;
l'identification (S2) de chaque indicateur de ladite pluralité d'indicateurs qui indique que l'amplitude attendue au temps de signal concerné satisfait une condition prédéterminée ;
l'accumulation (S3) des indicateurs identifiés ;
l'estimation (S4) de l'adéquation dudit signal pour une transmission selon un résultat de ladite accumulation ; et
la transmission (S5) soit dudit signal soit d'un autre signal OFDM possible selon l'adéquation estimée.

2. Procédé de transmission selon la revendication 1, comportant l'exécution desdites étapes d'obtention, d'identification, d'accumulation et d'estimation pour une pluralité de signaux OFDM possibles, et la transmission de l'un desdits signaux OFDM possibles selon les adéquations respectives de ces signaux pour une transmission.

3. Procédé de transmission selon l'une quelconque des revendications précédentes, dans lequel ladite condition prédéterminée est celle selon laquelle l'amplitude de l'indicateur concerné est supérieure à un niveau de seuil prédéterminé.

**4.** Procédé de transmission selon l'une quelconque des revendications précédentes, dans lequel chacun desdits indicateurs est représentatif d'un niveau de puissance de son signal OFDM possible.

**5.** Procédé de transmission selon la revendication 3 ou 4, dans lequel ledit niveau de seuil prédéterminé est un niveau de seuil de puissance.

**6.** Procédé de transmission selon la revendication 5, dans lequel ledit niveau de seuil de puissance est égal à un niveau d'écrêtage d'un amplificateur dans ledit émetteur auquel l'amplificateur cesse de fonctionner linéairement.

**7.** Procédé de transmission selon la revendication 5, dans lequel ledit niveau de seuil de puissance est supérieur à un niveau d'écrêtage d'un amplificateur dans ledit émetteur auquel l'amplificateur cesse de fonctionner linéairement.

**8.** Procédé de transmission selon l'une quelconque des revendications précédentes, dans lequel le ou chaque signal OFDM possible est défini à une pluralité de temps d'échantillonnage, le procédé comportant l'obtention, pour le ou chaque signal possible, d'un indicateur pour chaque temps d'échantillonnage.

**9.** Procédé de transmission selon l'une quelconque des revendications 3 à 8, dans lequel l'amplitude de chaque indicateur identifié dépasse le niveau de seuil prédéterminé d'une quantité excédentaire respective, et dans lequel la ou chaque étape d'accumulation comprend l'addition des quantités excédentaires pour les indicateurs identifiés obtenus pour le signal OFDM possible concerné.

**10.** Procédé de transmission selon l'une quelconque des revendications précédentes, dans lequel la ou chaque étape d'estimation comporte la comparaison du résultat de l'accumulation concernée à une valeur cible, et la détermination que le signal OFDM concerné est approprié pour une transmission si ce résultat se trouve en dessous de la valeur cible.

**11.** Procédé de transmission selon l'une quelconque des revendications 2 à 9, dans lequel la ou chaque étape d'estimation comprend la comparaison du résultat de l'accumulation concernée au résultat d'au moins une autre accumulation, et la détermination que le signal OFDM concerné est approprié pour une transmission si ce résultat est inférieur à au moins cet autre résultat.

**12.** Procédé de transmission selon l'une quelconque des revendications précédentes, comportant en outre l'utilisation d'une technique de réglage de phase dans laquelle deux ou plusieurs signaux OFDM possibles sont formés à partir du même ensemble de symboles en leur appliquant différents ensembles de réglages de phase.

**13.** Procédé de transmission selon la revendication 12, dans lequel ladite technique de réglage de phase est une technique de mappage sélectif.

**14.** Procédé de transmission selon l'une quelconque des revendications 1 à 12, comportant en outre l'utilisation d'une technique de réglage de phase dans laquelle deux ou plusieurs signaux OFDM possibles sont formés à partir du même ensemble de séquences de données en leur appliquant un ensemble différent de réglages de phase, dans lequel :

chaque séquence de l'ensemble de séquences est la transformée inverse de Fourier d'un sous-bloc correspondant de symboles ; et
pour chacun desdits signaux OFDM possibles, chaque réglage de phase de l'ensemble de réglages de phase concerné est appliqué à une séquence différente parmi lesdites séquences.

**15.** Procédé de transmission selon la revendication 14, dans lequel ladite technique de réglage de phase est une technique de séquence de transmission partielle.

**16.** Procédé de transmission selon l'une quelconque des revendications 1 à 12, comportant en outre l'utilisation d'une technique de réservation dans laquelle une pluralité de sous-porteuses disponibles sont réservées pour un réglage de signal, dans lequel le ou chaque signal OFDM possible est formé pendant un cycle d'un processus itératif exécuté sur un signal OFDM initial, ledit processus comportant, lors un premier cycle, la soustraction d'un signal ne possédant pas de composantes de fréquence substantielles dans les sous-porteuses non réservées du signal OFDM initial pour former un signal OFDM possible et, lors du second cycle et suivants, la soustraction du ou d'un autre signal ne possédant pas de composantes de fréquence substantielles dans des sous-porteuses non réservées du signal OFDM possible formé lors du cycle précédent pour former un autre signal OFDM possible.

17. Procédé de transmission selon la revendication 16, dans lequel ladite technique de réservation est une technique de "tone reservation".

18. Émetteur OFDM, comportant :

des moyens d'obtention d'indicateur (4) permettant d'obtenir une pluralité d'indicateurs pour le signal OFDM possible, chaque indicateur de ladite pluralité d'indicateurs étant représentatif d'une amplitude d'une propriété prédéterminée de son signal OFDM possible attendu à un temps de signal respectif ;
des moyens d'identification (8) permettant d'identifier chaque indicateur de ladite pluralité d'indicateurs qui indiquent que l'amplitude attendue au temps de signal concerné satisfait une condition prédéterminée;
des moyens d'accumulation (10) permettant d'accumuler les indicateurs identifiés ;
des moyens d'estimation (12) permettant d'estimer l'adéquation dudit signal pour une transmission selon un résultat de ladite accumulation ; et
des moyens de transmission (14) permettant de transmettre soit ledit signal soit un autre signal OFDM possible selon l'adéquation estimée.

START

OBTAIN ONE OR MORE
SETS OF INDICATORS,
EACH SET RELATING TO A
DIFFERENT PROSPECTIVE
OFDM SIGNAL — S1

FOR EACH SET, IDENTIFY
THOSE INDICATORS WHICH
SATISFY A PRE-DETERMINED
CONDITION — S2

FOR EACH SET, ACCUMULATE
THE IDENTIFIED INDICATORS — S3

ASSESS THE SUITABILITY
OF EACH PROSPECTIVE OFDM
SIGNAL FOR TRANSMISSION
BASED ON THE RESULT OF
THE ACCUMULATION — S4

TRANSMIT ONE PROSPECTIVE
SIGNAL BASED ON THE RESULT
OF THE SUITABILITY
ASSESSMENT — S5

END

## Fig.1

Fig.2

EP 1 838 062 B1

20

22

24

| | $\emptyset_0$ | $\emptyset_1$ | $\emptyset_2$ | - - - - - - - - - - - - - - - - - | $\emptyset_{N-1}$ |
|---|---|---|---|---|---|
| 1 | | | | | |
| 2 | | | | | |
| | | | | | |
| U | | | | | |

**PHASE VECTOR SELECTION UNIT**

INPUT DATA

**TRANSMISSION UNIT**

27

26

TRANSMITTER

*Fig.3*

<u>28</u>

START

RECEIVE BLOCK
OF DATA C — S10

CALCULATE
$C \otimes P_u$
FOR EACH OF THE
U PHASE VECTORS — S11

IDENTIFY THE
PHASE VECTOR FOR
WHICH THE OFDM SIGNAL
IS EXPECTED TO HAVE
THE LEAST ACP — S12

TRANSMIT THE BLOCK OF
DATA C AS AN
OFDM SIGNAL USING
THE IDENTIFIED PHASE
VECTOR — S13

END

*Fig.4*

SIGNAL POWER LEVEL OF PROSPECTIVE SIGNAL A

Fig.5

SIGNAL POWER LEVEL OF PROSPECTIVE SIGNAL B

Fig.6

| Parameter | Value |
|---|---|
| Total number of sub carriers | 128, 512 |
| Synchronisation | Perfect |
| Modulation | 16 QAM |
| Sampling rate | 256 and 1024 samples per symbol |
| Clipping Level | 2 dB |
| Sub carrier spacing | 19.5 KHZ |
| Channel | AWGN |
| SLM Set Size | 64, 128 |

*Fig.7*

Performance comparison for SLM with PAPR and SLM with ACP,
128 Sub Carriers and SLM set size of 64

*Fig.8*

Performance comparison for SLM with PAPR and SLM with ACP,
512 Sub Carriers and a phase set size of 128 for SLM

*Fig.9*

EP 1 838 062 B1

_30_

32

DATA SYMBOL SOURCE

DS

36

PARTITIONING UNIT

$X$

38

SUB-DIVISION UNIT

34

PILOT SYMBOL SOURCE

PS

$X_1$

$40_1$

IDFT

$x_1$

$42_1$

$\tilde{b}_1$

$X_2$

$40_2$

IDFT

$x_2$

$42_2$

$\tilde{b}_2$

$X_M$

$40_M$

IDFT

$x_M$

$42_M$

$\tilde{b}_M$

46

+

$\check{x}_{ACP}$

OPTIMISATION UNIT

44

*Fig.10*

_40_

START

RECEIVE BLOCK
OF DATA X — S14

SUB-DIVIDE BLOCK X — S15
INTO M DISJOINT
SUB-BLOCKS Xm,
$1 < m < M$

FOR EACH SUB-BLOCK — S16
Xm, OBTAIN BY IDFT A
CORRESPONDING PARTIAL
TRANSMIT SEQUENCE $x_m$

IDENTIFY VECTOR $b_{ACP}$ — S17

,WHERE $b_{ACP} = [\tilde{b}_1, \tilde{b}_2 ..., \tilde{b}_M]$,
EXPECTED TO PRODUCE OFDM
SIGNAL WITH LEAST ACP

MULTIPLY PARTIAL TRANSMIT — S18
SEQUENCES $x_m$ BY FACTORS
$\tilde{b}_m$, RESPECTIVELY

SUM MULTIPLICATION RESULTS — S19
FOR TRANSMISSION

END

_Fig.11_

Fig.12

*100*

START

SELECT A SUB-SET L
OF AVAILABLE N SUB-CARRIERS
FOR TONE RESERVATION — S20

OBTAIN VECTOR P
FOR SUB-SET L — S21

GENERATE PEAK REDUCTION
KERNEL p AS IFFT OUTPUT
OF P — S22

GENERATE SCALED AND
PHASE-SHIFTED VARIATIONS
OF p — S23

STORE IN MEMORY — S24

END

*Fig.13*

EP 1 838 062 B1

START

*110*

S25 — RECEIVE DATA VECTOR X AND RESERVED TONE VECTOR C

S26 — COMBINE VECTORS X AND C AND PERFORM IFFT OPERATION THEREON

S27 — PROSPECTIVE SIGNAL

S28 — IS ACP ACCEPTABLE ?  —NO

YES

S29 — START GRADIENT ALGORITHM

S30 — $i=0$

S31 — DETECT PEAK IN PROSPECTIVE SIGNAL

S32 — SELECT OR GENERATE SCALED, PHASE-ROTATED AND SHIFTED PEAK REDUCTION KERNEL $p$

S33 — SUBTRACT FROM PROSPECTIVE SIGNAL

S34 — NEW PROSPECTIVE SIGNAL

A

S35 — $i = i_{MAX}$ ?  —YES

NO

S36 — IS ACP ACCEPTABLE ?  —YES

NO

S37 — $i = i+1$

S38 — EXIT GRADIENT ALGORITHM

S39 — TRANSMIT NEWEST PROSPECTIVE SIGNAL

END

*Fig.14*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A.D.S. JAYALATH ; C. TELLAMBURA.** SLM and PTS Peak-Power Reduction of OFDM Signals Without Side Information. *IEEE Transactions on Wireless Communications,* September 2005, vol. 4 (5), 2006-2013
- **A.D.S. JAYALATH ; C. TELLAMBURA.** A blind SLM receiver for PAR-reduced OFDM. *VTC 2002-Fall,* 24 September 2002, vol. 1, 219-222
- **STEFAN H. MUTTER ; JOHANNES B. HUBER.** A comparison of Peak Power Reduction Schemes for OFDM. *In Proc. of the IEEE Global Telecommunications Conference GLOBECOM '97,* November 1997, 1-5